(19) Europäisches Patentamt / European Patent Office / Office européen des brevets

(11) **EP 4 358 098 B1**

(12) **FASCICULE DE BREVET EUROPEEN**

(45) Date de publication et mention de la délivrance du brevet:
**30.04.2025  Bulletin 2025/18**

(21) Numéro de dépôt: **23203947.9**

(22) Date de dépôt: **17.10.2023**

(51) Classification Internationale des Brevets (IPC):
**G21D 3/08** *(2006.01)*

(52) Classification Coopérative des Brevets (CPC):
**G21D 3/08**

(54) **PROCÉDÉ D ESTIMATION D'UNE VALEUR FUTURE D'UNE GRANDEUR PHYSIQUE D'UN SYSTÈME INDUSTRIEL TEL QU UN RÉACTEUR NUCLÉAIRE**

VERFAHREN ZUR SCHÄTZUNG EINES ZUKÜNFTIGEN WERTES EINER PHYSIKALISCHEN GRÖSSE EINES INDUSTRIELLEN SYSTEMS, WIE Z.B. EINES KERNREAKTORS

METHOD FOR ESTIMATING A FUTURE VALUE OF A PHYSICAL QUANTITY OF AN INDUSTRIAL SYSTEM SUCH AS A NUCLEAR REACTOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **18.10.2022  FR 2210720**

(43) Date de publication de la demande:
**24.04.2024  Bulletin 2024/17**

(73) Titulaire: **Electricité de France**
**75008 Paris (FR)**

(72) Inventeurs:
• **BODET, Patrick**
**92160 Antony (FR)**
• **DELCOIGNE, Franck**
**75017 Paris (FR)**
• **MARGUET, Serge**
**94240 L'Haÿ-les-Roses (FR)**
• **PENIT, Thomas**
**91190 Gif-sur-Yvette (FR)**

(74) Mandataire: **Regimbeau**
**20, rue de Chazelles**
**75847 Paris Cedex 17 (FR)**

(56) Documents cités:
**US-A1- 2007 179 919     US-A1- 2022 084 706**

• **DUPRÉ GUILLAUME ET AL: "Design and comparison of two advanced core control systems for flexible operation of pressurized water reactors", CONTROL ENGINEERING PRACTICE, PERGAMON PRESS, OXFORD, GB, vol. 123, 12 April 2022 (2022-04-12), XP087033053, ISSN: 0967-0661, [retrieved on 20220412], DOI: 10.1016/ J.CONENGPRAC.2022.105170**

EP 4 358 098 B1

**Description**

**DOMAINE DE L'INVENTION**

L'invention concerne l'estimation d'un état futur d'un système industriel complexe et en particulier d'une centrale nucléaire et d'un réacteur nucléaire.

**ETAT DE LA TECHNIQUE**

Un système industriel complexe est ici entendu comme un système dont l'état dépend de nombreuses grandeurs physiques et dont l'évolution dépend de manière très sensible de ses conditions initiales. Un tel système nécessite pour être caractérisé de la mesure ou de la connaissance de nombreuses variables. L'évolution d'un tel système dépend également de nombreuses variables, variables dont les évolutions peuvent dépendre les unes des autres.

Les systèmes industriels sont difficiles à piloter au sens où pour les manœuvrer d'un point de fonctionnement à un autre, le système peut devenir fortement instable de sorte qu'il est très difficile d'en prévoir l'évolution.

Un réacteur nucléaire constitue un exemple de système industriel complexe. Les phénomènes physiques qui s'y produisent relèvent de la physique nucléaire, et notamment de la neutronique, de la thermodynamique, et notamment de la thermohydraulique et de la thermomécanique. Dans un réacteur, c'est la population de neutrons qui gouverne la génération première d'énergie, énergie qui se trouve communiquée à un fluide caloporteur selon divers mécanismes de transfert. Cette population et sa répartition spatiale varient au cours du temps selon son interaction avec la matière environnante comprenant notamment le combustible et le fluide caloporteur. Cette variation est notamment fonction de l'absorption (fissile, fertile et stérile), de la diffusion, de la réflexion et des fuites de neutrons. Il est à noter qu'une variation de population peut faire varier des propriétés de la matière environnante, variations qui peuvent ensuite rétroagir sur la population de neutrons.

Par exemple, une fission nucléaire suite à une interaction entre un noyau lourd et un neutron produit une énergie qui peut être absorbée par le fluide caloporteur. La température du milieu environnant en est modifiée et cette variation de température modifie à son tour la réactivité nucléaire dans le réacteur comme notamment la probabilité d'absorption d'un neutron libre par un noyau lourd. Les phénomènes mis en jeu dans le réacteur sont de natures diverses et ils interagissent entre eux. En outre, il est à noter que la population de neutrons dépend de la cinétique des processus de production de neutrons par fission répartie entre neutrons prompts et neutrons retardés, ces derniers minoritaires et naissant plusieurs secondes après les neutrons prompts étant essentiels pour permettre le pilotage du réacteur.

Dans le cas des réacteurs nucléaires, il existe un besoin croissant de manœuvrabilité lié à l'émergence des énergies dites renouvelables. Les systèmes produisant des énergies dites renouvelables sont de plus en plus présents sur le réseau électrique. Par nature, ceux-ci sont liés aux conditions climatiques et produisent donc une puissance électrique intermittente et fluctuante. Le réseau électrique ne peut fonctionner correctement en présentant lui aussi de telles fluctuations. La production d'électricité par les centrales nucléaires peut, au contraire de la production par les systèmes produisant des énergies dites renouvelables, être pilotée. Les centrales nucléaires peuvent donc servir à compléter les systèmes d'énergies renouvelables pour assurer une stabilité globale du réseau électrique résultant d'un équilibre de production d'électricité et de consommation. Pour intégrer davantage d'énergie dite renouvelable sur le réseau, tout en s'adaptant à la demande, il devient nécessaire que le fonctionnement d'un réacteur nucléaire soit ajusté plus fréquemment, c'est-à-dire qu'il puisse être adapté sur des fenêtres temporelles plus courtes et plus nombreuses que dans la pratique antérieure.

Il existe donc un besoin de mieux prédire l'évolution d'un système industriel complexe, et notamment celle d'un réacteur nucléaire.

Afin d'introduire plus précisément l'invention et son application à un réacteur nucléaire, il est spécifié les compléments suivants.

L'invention s'inscrit notamment dans le domaine de la conduite d'un réacteur nucléaire d'une centrale de production d'électricité. Plus précisément, elle sert à la simulation neutronique des cœurs nucléaires en exploitation, afin de permettre à l'opérateur d'une tranche nucléaire d'évaluer les marges de sécurité prévisibles.

Par tranche nucléaire on entend une unité de production d'électricité, composée schématiquement d'une chaudière nucléaire, des circuits alimentant la turbine génératrice de courant, et du contrôle commande permettant à un opérateur de piloter la production d'électricité.

Le respect de ces marges, qui assure un fonctionnement en sécurité, est aujourd'hui garanti par les règles de pilotage. L'outil de simulation ne s'y substitue pas, mais permet, dans le respect des règles de pilotage, d'optimiser le pilotage et de mieux s'adapter aux contraintes du réseau électrique. En particulier, lorsque des énergies renouvelables produisent de l'électricité sur le réseau, l'outil de simulation permet à la tranche nucléaire de s'adapter plus rapidement, le tout s'inscrivant dans une démarche globale de réduction des émissions de CO2.

Plus particulièrement, le domaine de la présente invention s'inscrit dans la simulation numérique de phénomènes physiques complexes tel qu'ils se produisent lors de la conduite d'une tranche nucléaire.

Par ailleurs, le pilotage d'un réacteur nucléaire nécessite de connaître l'état présent du réacteur pour pouvoir atteindre un point de fonctionnement prédéterminé à l'aide de moyens de commande dont dispose l'opérateur de conduite.

Or, lesdits phénomènes physiques au sein d'un réacteur nucléaire sont d'une grande complexité ce qui nécessite de faire appel à de multiples branches de la physique dont la physique nucléaire, la neutronique (eg. lois qui gouvernent la population de neutrons), la thermohydraulique (eg. la mécanique des fluides et le transport de la chaleur), la thermique et la thermomécanique (effet des efforts sur des matériaux soumis à la chaleur); ces sciences s'appliquant ici au cœur des réacteurs nucléaires. On le voit, les phénomènes qui se produisent sont de natures diverses; ils interagissent en outre les uns avec les autres. Ainsi et par exemple, une fission (physique nucléaire) se produit par l'interaction d'un noyau lourd avec des neutrons (neutronique), ladite fission produit de la chaleur qui se propage dans la matière (thermique), celle-ci transmettant ses calories à l'eau qui les transporte (thermohydraulique). Ici la neutronique est la branche centrale du fait qu'elle gouverne la génération des phénomènes précités, elle permet la caractérisation de la population neutronique répartie spatialement et temporellement selon un spectre énergétique qui dépendra de l'interaction avec la matière. Ces interactions sont l'absorption (fissile, fertile et stérile), la diffusion, la réflexion, les fuites de neutrons. Il faut y ajouter une composante cinétique liée à la production effective de neutrons par fission répartie en neutrons prompts et neutrons retardés, ces derniers minoritaires et naissant plusieurs secondes après les neutrons prompts sont essentiels pour permettre le pilotage d'un réacteur nucléaire.

Ainsi, il apparaît clair que le comportement neutronique ne peut être appréhendé dans sa globalité par un opérateur d'une tranche nucléaire qui souhaite prendre une décision sur la base d'indicateurs facilement interprétables. En définitive l'opérateur n'a pas d'appréciation de l'état de stabilité d'un réacteur lui permettant sur l'état observé de prédire par simulation neutronique une trajectoire du point de fonctionnement qui soit la plus proche de la réalité. Si l'état de départ est faussé, la trajectoire du point de fonctionnement le sera aussi. C'est le problème plus général connu dit de la connaissance des « conditions initiales » d'un système physique avant de lui appliquer un modèle physique de simulation.

On comprend donc que le développement des énergies renouvelables induit un besoin d'une manœuvrabilité accrue des centrales nucléaires. Répondre aux sollicitations du réseau nécessite de pouvoir simuler

- d'une part de manière rapide par exemple en moins de deux minutes de calcul pour un transitoire de puissance s'étendant sur une plage de dix heures et

- d'autre part de manière précise les actions de pilotage à entreprendre.

En effet, le respect des marges de fonctionnement et de sécurité doit toujours être assuré, et celles-ci doivent donc être anticipées de manière précise. Une simulation précise permet en outre à l'opérateur d'affiner sa stratégie de pilotage pour optimiser sa conduite.

Cette optimisation peut revêtir de multiples formes, et l'action de l'opérateur est fondamentale pour réaliser les choix qui y conduisent.

Prenons par exemple le cas d'une augmentation de puissance par dilution de l'eau borée présente dans le cœur. Cette dilution réduit la concentration en bore qui est un absorbant de neutrons. Cette baisse de concentration en bore augmente donc automatiquement la population de neutrons, donc le nombre de fissions, donc le niveau de puissance.

Cette dilution engendre des mouvements d'eau conduisant au rejet d'eau borée ce qui constitue un effluent, déchet pénalisant pour l'exploitant, même si ce déchet est valorisable.

L'opérateur peut agir sur le bore ou les barres d'absorbant pour piloter la puissance du réacteur. Chaque moyen a des caractéristiques différentes :

- les barres d'absorbant ont une action immédiate sur la puissance du réacteur, mais la **déstabilisent axialement** et créent une oscillation temporelle qui sera compensée avec du bore (d'où production d'effluents dans un second temps), et surtout un **risque de sortie du domaine de fonctionnement** si la compensation n'est pas suffisante.

- Le bore a un effet géométriquement homogène sur la puissance, mais il a une vitesse d'action plus modérée que les barres d'absorbant, et sous un certain délai (l'acheminement du bore depuis sa réserve de stockage jusqu'au cœur prend une dizaine de minutes). Chaque introduction d'eau borée dans le circuit primaire qui alimente le cœur nucléaire doit être compensé par un soutirage d'un volume équivalent (car le volume du circuit est constant), autrement dit par la **production d'effluents liquides.** Par contre, la distribution axiale de puissance est moins perturbée que lors de l'utilisation des barres d'absorbant, ce qui nécessitera moins de compensations dans un second temps.

On voit donc que le choix du mode de pilotage nécessite de concilier deux exigences techniquement contradictoires : le contrôle de la distribution axiale de puissance, et la production d'effluents liquides. Les phénomènes mis en jeu sont complexes, et l'aide d'un outil de simulation est donc fondamentale pour évaluer le déséquilibre axial de puissance et le volume d'effluents produit. Cette connaissance permettra à l'opérateur, en fonction des contraintes externes (demande de rapidité de variation de la puissance, contraintes financières ou techniques relatives à la production d'effluents), de choisir le bon compromis.

_Solutions déjà connues / produits ou procédés existants_

L'opérateur dispose schématiquement de deux moyens d'action principaux pour piloter le réacteur nucléaire :

- des barres d'absorbants dont l'insertion ou le retrait permet de moduler la puissance et la température du réacteur,

- du bore dilué dans l'eau servant à absorber les neutrons

Afin d'utiliser à bon escient les moyens de pilotage dont il dispose, c'est-à-dire efficacement et en respectant les critères de sûreté, l'opérateur doit connaître l'état présent de la tranche nucléaire, et appréhender de manière satisfaisante le transitoire à passer pour atteindre l'état futur recherché.

C'est principalement l'évolution du xénon dans le cœur qui impacte la conduite à tenir. Le xénon 135, l'un des produits de la fission, produit directement ou par désintégration d'autres produits de fissions est un poison neutronique très important, dont la production est liée à l'état courant de la tranche nucléaire mais aussi à ses états passés, et impacte fortement les états futurs. Produit et consommé sous flux neutronique, le xénon atteint ainsi un niveau d'équilibre lié à la puissance courante. En cas de baisse de puissance, la production de xénon se poursuit mais pas sa consommation en raison de la baisse du flux neutronique, ce qui provoque une accumulation de xénon qui doit être compensée pour stabiliser un nouveau niveau de puissance. La physique du xénon provoque des phénomènes oscillants, désignés sous l'expression d'oscillations xénon, temporels et spatiaux, qui, s'ils ne sont pas maîtrisés, peuvent conduire à la sortie du domaine acceptable de fonctionnement du réacteur nucléaire. Concrètement, cela peut se traduire par un arrêt automatique du cœur pour non-respect des marges de sûreté. Une simulation précise de l'état futur du cœur est donc fondamentale pour le pilotage d'une tranche nucléaire manœuvrante.

Au sein du réacteur, on peut définir la direction axiale z comme la direction verticale donnée par un fil à plomb. Cette direction z est orientée verticalement vers le haut au sein du réacteur. Pour caractériser l'écart entre une puissance $P_h$ dans la moitié haute du cœur du réacteur et une puissance $P_b$ dans la moitié basse du cœur du réacteur.

En particulier, il est utile de disposer d'une simulation précise du décalage axial (que l'on peut désigner par sa dénomination anglaise « _Axial Offset_ » abrégée en AO) ou du déséquilibre axial de puissance que l'on peut désigner par les notations "_ΔI_" ou « DPAX »). Ces deux grandeurs caractérisent l'écart de puissance entre le haut et le bas du réacteur et sont définies par les formules suivantes :

$$AO = \frac{P_h - P_b}{P_h + P_b}$$

$$DPAX = \frac{P_h - P_b}{P_n}$$

avec $P_n$ la puissance nominale du réacteur.

Le terme $P_h + P_b = P_t$ désigne la puissance totale instantanée dans le réacteur. Le décalage axial est une valeur relative de puissance par rapport à la puissance totale instantanée.

Le déséquilibre axial « DPAX » est une valeur relative de puissance par rapport à la puissance nominale $P_n$, puissance nominale qui n'est pas nécessairement égale à la puissance totale instantanée Pt.

La relation entre les deux grandeurs est la suivante :

$$DPAX = AO \times \frac{P_h + P_b}{P_n} = AO \times P_{rel}$$

Avec $P_{rel}$ qui est la puissance relative, exprimée en pourcentage de la puissance nominale.

Cette simulation permet d'assurer le non-franchissement de seuils de température dangereux pour l'intégrité du combustible nucléaire. Le paramètre axial offset ne peut être appréhendé sans outil de simulation sur des durées de plusieurs heures par un opérateur, même très expérimenté.

Cette simulation est assurée par des outils numériques (Outils d'Aide au Pilotage, ou OAP). L'OAP est un outil numérique qui fonctionne en permanence lorsque que le réacteur nucléaire est en marche. Il est alimenté en temps réel par les données expérimentales issues des capteurs, et par des données essentielles calculées à partir des mesures des capteurs. Son rôle est de fournir en temps réel un aperçu de l'état du cœur à l'opérateur. Cet état est déterminé grâce :

- à la représentation graphique de grandeurs expérimentales, associées à leurs limites théoriques ou calculées (par exemple, position du groupe R - barres absorbantes dites barres de régulations- associée à sa limite d'insertion), et
- à la représentation graphique de grandeurs importantes pour le pilotage, mais non mesurables. Celles-ci sont donc obtenues par le calcul (exemple : AO lode ; déséquilibre axial de la répartition de l'Iode entre la moitié haute du cœur et la moitié basse du cœur).

Dans le texte on utilisera les termes « grappes », « groupes », ou « barres », mis au pluriel ou au singulier pour désigner des dispositifs d'insertion dans le cœur absorbants de neutrons.

Une barre d'absorbant est comme son nom l'indique un long crayon de matière absorbante. Dans le cœur, les barres sont regroupées en grappes. Chaque grappe s'insère dans un assemblage combustible. Elles sont regroupées en groupes de grappes de poids neutrophage équivalent, réparties de manière homogène dans le cœur, afin que leur insertion ne déstabilise par la répartition radiale de puissance.

Le rôle de la simulation est également de permettre à l'opérateur de préparer un transitoire de puissance. Pour cela, l'OAP permet la réalisation de simulations. Le résultat de ces simulations est également présenté sous forme graphique à l'utilisateur (diagramme de pilotage, position des groupes, courbe de concentration en bore...) pour lui permettre de visualiser le devenir de l'état du cœur.

Le procédé est itératif : l'opérateur formule des hypothèses (par exemple, obtenir un état en plaçant les barres à une position donnée), visualise leur impact, puis les modifie et relance une simulation si besoin, jusqu'à ce que ses exigences en termes de pilotage soient remplies (par exemple, minimiser le volume d'effluents liquides, obtenir une stabilité du cœur au plus tôt, remonter en puissance plus vite...).

La plupart des OAP actuels utilisent des codes neutroniques 0D ou 1D. Pour les codes 0D, l'accès à la simulation de l'AO, grandeur axiale, est impossible par principe. L'aide apportée est donc limitée, et les transitoires de puissance à mener ne sont pas optimisables par l'outil de simulation.

Les codes 1D fournissent les paramètres axiaux intéressants pour le pilotage, mais la modélisation d'une entité complexe comme un cœur nucléaire sous forme d'un simple « fil 1D » est limitée sur des cœurs de grande dimension. Dans ces réacteurs en effet, les neutrons ayant un libre parcours moyen de faible dimension par rapport à la géométrie globale, des parties éloignées entre elles du cœur se comporteront de manière physiquement découplée. Pour simuler correctement ces « secteurs découplés » du cœur, il est nécessaire d'introduire une modélisation 3D.

Des outils munis d'un code 3D existent aujourd'hui, mais correspondent la plupart du temps à des aides de type « core monitoring », où l'accent est mis sur la visualisation de l'état courant de la tranche, mais pas sur la simulation du futur. La spécificité de la solution que nous envisageons est de disposer de la modélisation 3D du cœur, en l'associant à des modèles que nous avons développés pour à la fois représenter en temps réel et de manière précise l'état du cœur, mais aussi être en mesure de réaliser des simulations prédictives de l'état futur du réacteur nucléaire.

Ainsi, le but principal de l'invention est la détermination de l'état de stabilité d'un cœur qui coïncide avec l'état initial - c'est-à-dire les conditions initiales- du cœur du réacteur nucléaire pour lequel on souhaite simuler la trajectoire du point de fonctionnement depuis ledit état initial (stable) vers un état final, la cible recherchée.

US 2007/179919 A1 (KROPACZEK DAVID J [US] ET AL) est considéré comme un état de la technique pertinent décrivant une méthode d'estimation de la valeur future d'une quantité physique d'un système industriel.

## EXPOSE DE L'INVENTION

Un but de l'invention est de proposer un procédé d'estimation des valeurs futures d'une grandeur physique d'un système complexe.

Le but est atteint dans le cadre de la présente invention grâce à un procédé d'estimation d'une valeur future d'une grandeur physique d'un système industriel, le procédé comprenant les étapes suivantes :

- pour chaque variable d'une pluralité de variables du système, obtention d'une séquence de mesures successives de la variable, chaque variable étant associée à une variable normalisée définie comme le rapport de la variable à une valeur de référence, et normalisation de la séquence des mesures successives de sorte à obtenir une séquence de mesures successives de la variable normalisée,

- détermination d'un paramètre de stabilité du système de sorte à obtenir une séquence de valeurs successives du paramètre de stabilité, le paramètre de stabilité étant une somme pondérée par des coefficients prédéterminés de taux de variation des variables normalisées,

- identification d'un intervalle temporel de stabilité le plus récent dans lequel pour chaque point de l'intervalle le paramètre de stabilité est inférieur ou égal à un seuil prédéterminé depuis une durée supérieure ou égale à une durée prédéterminée,

- estimation pour une variable particulière de la pluralité des variables d'une partie de la séquence de mesures successives de la variable particulière, de sorte à obtenir une séquence d'estimations successives de la variable particulière, un début temporel de la séquence de mesures successives correspondant à un instant compris dans l'intervalle temporel, l'estimation étant effectuée par un estimateur,

- comparaison de la séquence d'estimations successives et de la partie de la séquence de mesures successives de sorte à déterminer une valeur d'un paramètre de recalage, le paramètre de recalage étant configuré pour être utilisé par l'estimateur pour améliorer l'estimation, et

- estimation de la valeur future de la grandeur physique du système par l'estimateur en utilisant la valeur du paramètre de recalage.

Un tel procédé est avantageusement et optionnellement complété par les différentes caractéristiques suivantes prises seules ou en combinaison :

- une étape de relevé au cours du temps de mesures successives des variables de sorte à obtenir les séquences de mesures successives ;

- le système industriel étant un réacteur nucléaire, la pluralité de variables physiques comprend une puissance du réacteur, une température moyenne d'une cuve du réacteur, un déséquilibre axial de puissance, une concentration en une espèce chimique dans un fluide caloporteur circulant dans le réacteur, l'espèce chimique étant configurée pour absorber des neutrons dans le réacteur, et une position d'un dispositif configuré pour absorber des neutrons dans le réacteur, la variable particulière étant le déséquilibre axial de puissance ;

- l'estimation de la valeur future de la grandeur physique du système prend en compte un scénario de commande du réacteur correspondant à une séquence de valeurs successives d'au moins une variable contrôlable par un opérateur ;

- une étape d'estimation de valeurs futures des variables de la pluralité de variables du système et une étape de détermination d'une valeur future du paramètre de stabilité à partir des valeurs futures des variables de la pluralité de variables du système ;

- une étape de détermination d'un score du scénario de commande, le score étant une valeur d'une grandeur choisie parmi un volume d'effluent produits, un écart moyen au déséquilibre axial de référence et une distance moyenne à des limites d'un domaine de fonctionnement du réacteur ; et

- le scénario de commande est un premier scénario de commande, l'estimation de la valeur future de la grandeur physique du système étant réalisée une seconde fois en remplaçant le premier scénario par un deuxième scénario de commande du réacteur correspondant à une autre séquence de valeurs successives d'au moins une variable contrôlable, le procédé comprenant de préférence une étape de comparaison des scores du premier scénario et du deuxième scénario.

L'invention porte également sur un programme d'ordinateur comprenant des instructions adaptées à la mise en œuvre d'au moins une des étapes du procédé tel que présenté plus haut lorsque ledit programme est exécuté sur un ordinateur.

L'invention porte enfin sur un dispositif d'estimation d'une valeur future d'une grandeur physique d'un système industriel, le dispositif étant configuré pour mettre en œuvre le procédé tel que présenté plus haut, le dispositif comprenant une unité de traitement configuré pour

- pour chaque variable de la pluralité de variables du système, obtenir les séries temporelles de mesures de variables du système, une séquence de mesures successives de la variable, chaque variable étant associée à une variable normalisée définie comme le rapport de la variable à une valeur de référence, et normaliser la séquence des mesures successives de sorte à obtenir une séquence de mesures successives de la variable normalisée,

- déterminer le paramètre de stabilité du système de sorte à obtenir une séquence de valeurs successives du paramètre de stabilité, le paramètre de stabilité étant une somme pondérée par des coefficients prédéterminés de taux de variation des variables normalisées,

- identifier l'intervalle temporel de stabilité le plus récent dans lequel pour chaque point de l'intervalle le paramètre de stabilité est inférieur ou égal à un seuil prédéterminé depuis une durée supérieure ou égale à une durée prédéterminée

le dispositif comprenant en outre l'estimateur configuré pour estimer pour une variable particulière de la pluralité des variables une partie de la séquence de mesures successives de la variable particulière, de sorte à obtenir une séquence d'estimations successives de la variable particulière, un début temporel de la séquence de mesures successives correspondant à un instant compris dans l'intervalle temporel,

l'unité de traitement étant configurée pour comparer la séquence d'estimations successives et la partie de la séquence de mesures successives de sorte à déterminer une valeur d'un paramètre de recalage, le paramètre de recalage étant configuré pour être utilisé par l'estimateur pour améliorer l'estimation,

l'estimateur étant configuré pour estimer la valeur future de la grandeur physique en utilisant la valeur du paramètre de recalage.

## DESCRIPTION DES FIGURES

D'autres caractéristiques et avantages de l'invention ressortiront encore de la description qui suit, laquelle est purement illustrative et non limitative, et doit être lue en regard des dessins annexés sur lesquels :

- la figure 1 est une représentation schématique d'un dispositif d'estimation d'une valeur future d'une grandeur physique d'un système industriel selon un mode de réalisation de l'invention.
- la figure 2 est une représentation schématique de déséquilibres axiaux DPAX au cours du temps.
- la figure 3 est une représentation schématique d'une puissance au cours du temps.
- la figure 4 est une représentation schématique d'une température au cours du temps.
- la figure 5 est une représentation schématique d'une concentration en Bore au cours du temps.
- la figure 6 est une représentation schématique d'un déséquilibre axial de puissance au cours du temps.
- les figures 7 et 8 sont des représentations schématiques d'une position de dispositifs d'absorption de neutrons, au cours du temps.
- la figure 9 est une représentation schématique d'un paramètre de stabilité au cours du temps.
- la figure 10 est une représentation schématique de variables du réacteur au cours du temps.

## DESCRIPTION DETAILLEE DE L'INVENTION

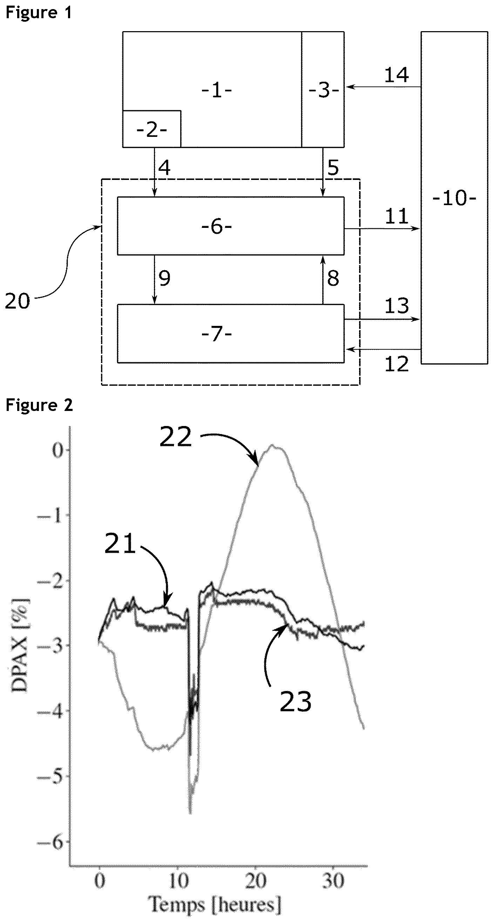

En référence à la figure 1, il est présenté un procédé et un dispositif d'estimation d'une valeur future d'une grandeur physique d'un système industriel 1.

Dans une première étape du procédé, on obtient, pour chaque variable d'une pluralité de variables du système, une séquence de mesures successives de la variable.

Les variables utilisées peuvent être notées $P_j$ avec un indice j variant de 1 à p.

Les variables peuvent être mesurées par des capteurs 2 du système 1 de sorte à générer des séquences de mesures. Les capteurs 2 sont connectés via une connexion 4 à une unité de traitement 6 d'un dispositif d'estimation 20. La connexion 4 permet de transmettre les séquences de mesures à l'unité de traitement 6.

La mesure peut être le signal directement issu du capteur ou bien une valeur déduite d'un ou plusieurs de ces signaux.

Une partie des variables peut être contrôlée via un centre de commande 3 du système 1. La séquence de valeurs successives de la commande peut alors constituer en elle-même une séquence de mesure de la variable commandée. Le centre de commande peut être connecté par une connexion 5 à l'unité de traitement 6 de sorte à transmettre les séquences de valeurs commandées à l'unité de traitement 6.

Les variables de la pluralité de variables sont choisies pour leur pertinence par rapport à la stabilité du système 1.

Une séquence de valeurs successives prises par une grandeur peut être également désignée par l'expression « série temporelle ». Une telle séquence donne l'évolution au cours du temps de la grandeur. Chaque mesure de la séquence est horodatée, c'est-à-dire qu'elle est associée à un instant de mesure. Il est donc possible de tracer un graphe de l'évolution de la grandeur en fonction du temps à partir de la séquence de valeurs successives. Le pas de temps qui sépare deux valeurs successives est de préférence constant au sein d'une séquence. Deux variables distinctes peuvent être mesurées de sorte que leurs pas de temps soient égaux ou différents.

Au cours de la première étape, l'unité de traitement 6 effectue une normalisation de chaque séquence de mesures successives.

Chaque variable est associée à une variable normalisée définie comme le rapport de la variable à une valeur de référence, par exemple la valeur prise par la variable à un point de fonctionnement nominal du système. La valeur de référence est prédéfinie avant la mise en œuvre du procédé. Lors la normalisation pour chaque variable, une séquence de mesures successives de la variable normalisée est produite.

Lors d'une deuxième étape, l'unité de traitement 6 détermine un paramètre de stabilité du système de sorte à obtenir une séquence de valeurs successives du paramètre de stabilité.

Le paramètre de stabilité est une somme pondérée par des coefficients prédéterminés de taux de variation des variables normalisées.

Le paramètre de stabilité que l'on peut également désigner sous l'expression « Critère Composite de Stabilité » abrégée en « CCS », peut s'écrire sous la forme suivante :

$$CCS = \sum_{j=1}^{p} \alpha_j \Delta P_j / \Delta t$$

Le paramètre CCS apparaît ici comme la somme de p taux de variations $\Delta P_j / \Delta t$ chaque taux étant pondéré par un coefficient ou poids relatif $\alpha_j$.

Les variables $P_j$ sont normalisées et les coefficients $\alpha_j$ sont sans dimension, de sorte que le CCS est homogène à l'inverse d'un temps. Le CCS peut être exprimé en « dP » homogène à l'inverse d'un temps. L'unité appelée « dP » a été baptisée « de Penguern » en hommage à Lionel de Penguern, physicien d'EDF, dont une partie des travaux a concerné la stabilité des réacteurs nucléaires. Les ordres de grandeurs font que le CCS est souvent exprimé en milli dP, soit $10^{-3}$ dP ou mdP.

La variable $P_j$ varie de la quantité $\Delta P_j$ pendant l'intervalle de temps $\Delta t$. Ces variations se déduisent de la séquence de mesures successives de la variable $P_j$.

Les taux de variation de deux variables différentes ne se déterminent pas nécessairement sur les mêmes durées d'intervalle de temps. Cela peut notamment être le cas si les deux variables ne sont pas mesurées avec le même pas de temps. Mais cela peut aussi être le cas si un temps caractéristique de variation de la première variable est très différent d'un temps caractéristique de variation de la deuxième variable.

On peut imposer que la somme des coefficients soit égale à 1 :

$$\sum_{j=1}^{p} \alpha_j = 1$$

Les coefficients sont prédéterminés à partir de données historiques au cours d'une phase préliminaire d'analyse des données.

Plus précisément, on dispose d'une base de données historiques de fonctionnement de systèmes industriels dont le comportement est suffisamment proche du système que l'on souhaite simuler. La base de données comprend en particulier des relevés de mesures horodatées de variables $P_j$ de ces autres systèmes industriels. Au sein de cette base, on peut pour chaque système industriel définir des plages de fonctionnement stable et des plages de fonctionnement instable. On cherche ensuite des coefficients $\alpha_j$ vérifiant que

$$\sum_{j=1}^{p} \alpha_j = 1$$

et un seuil « s » de sorte que :

$$CCS = \sum_{j=1}^{p} \alpha_j \, \Delta P_j \, / \Delta t \, \leq s$$

pour toutes les plages de fonctionnement stable ; et

$$CCS = \sum_{j=1}^{p} \alpha_j \, \Delta P_j \, / \Delta t \, > s$$

pour toutes les plages de fonctionnement instable.

A l'issue de la phase préliminaire d'analyse des données, on dispose donc d'un seuil s - désigné ci-après « seuil prédéterminé » - et des coefficients $\alpha_j$ qui sont les coefficients prédéterminés.

Lors d'une troisième étape, l'unité de traitement 6 détermine un intervalle temporel de stabilité le plus récent dans lequel pour chaque point de l'intervalle le paramètre de stabilité est inférieur ou égal à un seuil prédéterminé depuis une durée supérieure ou égale à une durée prédéterminée.

A l'issue de la deuxième étape, on dispose d'une séquence de valeurs successives du paramètre de stabilité. Ces valeurs sont comparées au seuil prédéterminé s. On définit, à partir de la séquence de valeurs successives du paramètre de stabilité, des premières plages temporelles où $CCS \leq s$ et des deuxièmes plages temporelles où $CCS > s$.

On détermine pour chaque instant des premières plages temporelles où $CCS \leq s$, la durée depuis laquelle l'inégalité $CCS \leq s$ est vérifiée et on compare cette durée à une durée prédéterminée.

Cela permet d'identifier à l'intérieur des premières plages temporelles où $CCS \leq s$, les intervalles temporels de stabilité dans lesquels pour chaque point de l'intervalle le paramètre de stabilité est inférieur ou égal à un seuil prédéterminé depuis une durée supérieure ou égale à la durée prédéterminée.

On identifie ensuite parmi ces intervalles temporels de stabilité celui qui est le plus récent.

La durée prédéterminée peut être établie à partir de données historiques au cours d'une phase préliminaire d'analyse des données. La durée prédéterminée peut notamment être donnée par une fraction d'un temps caractéristique d'un phénomène d'instabilité qui affecte le système industriel, comme par exemple le phénomène d'instabilité le plus important ou le plus lent.

Au cours d'une quatrième étape, un estimateur 7 du dispositif d'estimation 20 est utilisé pour réaliser une estimation pour une variable particulière de la pluralité des variables d'une partie de la séquence de mesures successives de la variable particulière, de sorte à obtenir une séquence d'estimations successives de la variable particulière.

La variable particulière peut être choisie comme la variable la plus pertinente parmi la pluralité de variables par rapport à la stabilité du système 1. L'estimateur 7 peut en option produire une estimation de l'ensemble des variables de la pluralité des variables.

L'estimateur estime ici un historique du système 1, c'est-à-dire l'évolution du système 1 sur une plage temporelle qui a déjà eu lieu, puisqu'on dispose de mesures du système 1 pour cette plage temporelle. L'estimateur 7 fournit une séquence d'estimations successives de la variable particulière que l'on peut donc comparer aux mesures de cette variable particulière.

La plage temporelle qui fait l'objet de cette estimation correspond à l'intervalle temporel de stabilité le plus récent, et plus précisément un début temporel de la séquence de mesures successives qui est estimée est un instant compris dans l'intervalle temporel de stabilité le plus récent.

Ainsi, seule une partie de la partie de la séquence de mesures successives de la variable particulière est estimée par l'estimateur 7.

Cette situation suppose un canal de communication 9 depuis l'unité de traitement 6 vers l'estimateur 7. Des données nécessaires à l'estimation, comme notamment l'intervalle temporel de stabilité le plus récent, sont transmises de l'unité de traitement 6 vers l'estimateur 7.

L'estimateur 7 est un outil de simulation du système 1 qui permet de fournir des prévisions aussi proches que possible de la réalité. Toutefois, un tel estimateur 7 présente nécessairement des limites. Par exemple il peut ne pas prendre en compte l'historique du pilotage, qui n'est pas nécessairement connu du développeur du code de simulation. Par ailleurs, l'estimateur 7 présente aussi des limites car certains phénomènes qui se produisent dans le système 1 ne sont pris en compte dans le code de simulation. C'est le cas pour les phénomènes qui ne sont pas modélisés, parce que soit ils sont trop complexes, ou trop lourds en termes de calcul (le code doit en effet être suffisamment rapide pour avoir des applications industrielles), soit parce qu'ils sont liés à l'imperfection des mesures expérimentales (biais, bruits, incertitudes).

Au cours d'une cinquième étape, l'unité de traitement 6 effectue une comparaison de la séquence des estimations successives produites par l'estimateur 7 et de la partie de la séquence de mesures successives.

Cette situation suppose un canal de communication 8 depuis l'estimateur 7 vers l'unité de traitement 6. Des données nécessaires à la comparaison, comme notamment la séquence des estimations successives, sont transmises de l'estimateur 7 vers l'unité de traitement 6.

L'unité de traitement 6 détermine l'écart entre l'estimation réalisée et les mesures relevées de la variable particulière. L'unité de traitement 6 est configuré pour déterminer à partir de cette comparaison et par exemple de l'écart une valeur d'un paramètre de recalage. Le paramètre de recalage est configuré pour être utilisé par l'estimateur 7 pour améliorer l'estimation déjà effectuée et plus généralement des estimations réalisées pour la période de temps correspondante.

La comparaison effectuée par l'unité de traitement 6 donne des informations en rapport avec les limites de simulation de l'estimateur 7, et notamment les informations non prises en compte par l'estimateur 7 comme l'historique du pilotage ou les phénomènes non modélisés.

Le paramètre de recalage peut être de différente nature, mais il s'agit d'un paramètre utilisé par l'estimateur 7 pour produire ses estimations et dont la valeur peut être ajustée.

Au cours d'une sixième étape, l'estimateur 7 produit l'estimation de la valeur future de la grandeur physique du système en utilisant la valeur du paramètre de recalage.

Pour cela, le paramètre de recalage est transmis de l'unité de traitement 6 vers l'estimateur 7. La valeur du paramètre de recalage est réajustée dans le code de l'estimateur 7. De cette manière, les estimations produites par l'estimateur 7 sont améliorées, car les informations non prises en compte par l'estimateur 7 comme l'historique du pilotage ou les phénomènes non modélisés sont prises au compte, au moins partiellement, via le paramètre de recalage.

Le procédé se fonde sur l'utilisation d'un paramètre de stabilité qui permet d'identifier la plage temporelle la plus récente de fonctionnement stable du système. En rapport à cette plage de stabilité, on évalue la précision d'une estimation produite par l'estimateur en la comparant à une véritable mesure. Sur cette base, il est déterminé un paramètre de recalage qui permet, une fois transmis à l'estimateur, de corriger les estimations que l'estimateur peut produire ultérieurement. Les estimations produites d'une valeur future d'une grandeur du système peuvent être améliorées en particulier si la valeur future correspond à une période d'instabilité du système.

Cela permet de mieux prédire l'évolution d'un système industriel complexe, et notamment celle d'un réacteur nucléaire.

En option, le procédé comprend une étape de relevé au cours du temps de mesures successives des variables de sorte à obtenir les séquences de mesures successives. Cette étape est préalable ou simultanée avec la première étape mentionnée ci-dessus.

On s'intéresse à présent à la situation où le système industriel est un réacteur nucléaire.

Un réacteur nucléaire est le siège d'une réaction en chaîne de fission, principalement de noyaux d'uranium 235 par des neutrons. Les neutrons émis lors d'une fission étant trop énergétiques pour produire d'autres fissions, il est nécessaire de les ralentir pour atteindre des niveaux d'énergie plus faibles, où la probabilité de produire des fissions est plus forte. C'est l'eau circulant dans le cœur nucléaire qui sert à ralentir les neutrons (agissant comme modérateur), et également à transporter la chaleur produite lors des fissions (agissant comme caloporteur).

Un absorbant est un composé, introduit volontairement, ou produit par les réactions dans le cœur, qui capture les neutrons empêchant ces derniers de produire des fissions.

Il peut s'agir :

- du bore (introduit de manière diluée dans le modérateur, afin de limiter la réaction en chaîne) ; l'opérateur peut agir sur la concentration en bore dans le modérateur ;

- de barres d'absorbants : il s'agit d'un dispositif introduit dans les assemblages pour absorber les neutrons et diminuer la réaction en chaîne ; l'opérateur peut agir sur les barres d'absorbant ; par exemple sur le palier 1300 MWe, un groupe R, pour régulation, est destiné au contrôle de la température du cœur, et un groupe compensateur de puissance (GCP), lui-même constitué de plusieurs sous-groupes de barres d'absorption différentes, permet de moduler la puissance produite dans le cœur ;

- du xénon 135 : absorbant très efficace de neutrons produit lors du fonctionnement du cœur ; les variations de puissance du réacteur mettent en œuvre une physique complexe qui provoque des oscillations de concentration de xénon spatiales et temporelles ; l'opérateur ne peut agir directement sur le xénon, mais doit mettre en œuvre les moyens de le contrôler lorsqu'il pilote le réacteur ;

- du samarium 149 : également un absorbant de neutrons, mais moins efficace que le xénon : le samarium se cumule, contrairement au xénon qui lui se désintègre avec une période de 9h environ ;

- de divers produits de fission générés lors du fonctionnement du cœur d'effets moins importants que le Xénon ou le samarium ; l'opérateur ne peut agir sur ces éléments.

La réaction en chaîne peut donc être pilotée grâce aux barres, ou grappes, d'absorbants et au bore.

Le pilotage de ces paramètres permet d'instaurer les conditions voulues dans le cœur afin de produire la puissance désirée.

Toutefois, les actions réalisées par l'opérateur ne doivent jamais conduire, même transitoirement, à passer par un état qui puisse faire perdre l'intégrité du cœur. Pour cela, un domaine de fonctionnement a été prédéfini. Ce domaine est établi en concertation avec les autorités de sureté du pays.

Un domaine de fonctionnement est constitué d'un ensemble de points de fonctionnement, ces points représentent des grandeurs physiques associées au fonctionnement normal du réacteur. L'objectif d'un pilote de réacteur nucléaire est de maintenir l'état de la tranche nucléaire de sorte à ce que tous les points de fonctionnement prédéfinis restent dans ledit domaine de fonctionnement.

Celui-ci permet, par surveillance du déséquilibre axial de puissance (grandeurs AO, DI ou DPAX mentionnées plus haut), de garantir le respect de l'intégrité du combustible.

Lorsqu'un transitoire de puissance (c'est-à-dire une demande de modulation de la puissance produite) est demandé par le réseau électrique, la tranche nucléaire concernée peut manœuvrer de manière à satisfaire la demande, ou refuser de le faire pour raisons de sécurité, si son état ne le permet pas dans le respect des critères de sûreté.

Le procédé permet de simuler le transitoire de puissance à réaliser, à partir de l'état courant du réacteur, afin de voir si les critères de sûreté sont respectés. Ceci afin de ne pas refuser à tort de manœuvrer alors que les conditions le permettent. Le procédé permet également d'affiner la stratégie de pilotage afin d'optimiser la phase de conduite en connaissance.

Dans le cas où le système industriel est un réacteur nucléaire, et en rapport avec la première étape, la pluralité de variables physiques peut comprendre en particulier les variables suivantes :

- une puissance du réacteur,

- une température moyenne d'une cuve du réacteur,

- un déséquilibre axial de puissance DPAX comme on l'a déjà introduit précédemment,

Une quatrième variable est une concentration en une espèce chimique dans le fluide caloporteur, l'espèce chimique étant configurée pour absorber des neutrons dans le réacteur. Par exemple cette espèce chimique est le Bore.

Une cinquième variable est une position d'un dispositif configuré pour absorber des neutrons dans le réacteur. Plus précisément il s'agit de la position axiale de ce dispositif qui peut être maintenu au-dessus de la zone où circulent les neutrons ou bien descendu dans cette zone. Plus le dispositif est positionné bas dans la structure et plus il capture de neutrons. Cela permet de moduler la puissance et la température du réacteur.

Un tel dispositif peut être divisé en différentes unités qui peuvent être activées, c'est-à-dire descendues dans la zone où circulent les neutrons, indépendamment les unes des autres.

Une première unité peut être un groupe de barres formant un groupe de compensation de puissance (que l'on peut désigner sous l'abréviation GCP). Le GCP a pour but de compenser le défaut de puissance, c'est-à dire l'antiréactivité due à la variation de puissance. Le GCP peut lui-même être constitué de plusieurs sous-unités de barres d'absorption différentes. Le GCP est constitué de multiples barres d'absorbant qui s'insèrent dans le cœur. Elles ne sont pas toutes introduites en même temps dans le cœur, de manière à préserver la progressivité de l'action absorbante. Elles sont réparties en plusieurs sous-groupes (G1, G2, N1 et N2) qui comptent chacun plusieurs grappes de barres absorbantes, qui présentent des niveaux d'absorption différents, et qui sont répartis de manière homogène dans le cœur pour ne pas déséquilibrer radialement le flux neutronique.

Une deuxième unité peut être un groupe de régulation (que l'on peut désigner sous l'abréviation groupe R) de barres absorbantes. Le groupe R est un groupe destiné au contrôle de la température du cœur.

Plus généralement dans le cas où le système industriel est un réacteur nucléaire, la pluralité de variables pourrait également comprendre les variables suivantes : la température moyenne du cœur du réacteur, la température de la branche chaude, la température de la branche froide, la masse volumique de l'eau dans le cœur, la température effective du combustible et l'effet Doppler associé, la température de l'eau dans le cœur et l'effet de vide associé, la répartition du bore dans le cœur, la répartition du xénon 135 dans le cœur, la répartition du samarium 149 dans le cœur, des mesures chimiques, un déséquilibre azimutal de la puissance selon la dimension radiale du cœur (également connu sous l'expression anglaise « *tilt* »).

L'effet Doppler, mentionné plus haut, correspond à une contre-réaction liée à l'augmentation de la température dans les réacteurs nucléaires. Dans un réacteur nucléaire c'est en particulier l'uranium 238 qui est le siège principal de cet effet. En effet, la section efficace d'absorption neutronique de l'uranium 238 varie grandement dans le domaine épithermique du spectre énergétique des neutrons, siège de très nombreuses résonances dont l'amplitude varie avec la température du combustible. Quand la température du combustible augmente, les résonances s'élargissent et donc les captures neutroniques non génératrice de fissions immédiatement augmentent, entraînant une baisse du flux neutronique et donc une baisse du nombre de fissions ce qui entraîne une diminution de la puissance produite. L'effet Doppler est un des effets auto-stabilisant dans le cas d'un transitoire de de puissance donc de température (comme l'effet modérateur, voir ci-dessous) des REP. C'est un effet bénéfique recherché pour la sûreté intrinsèque des réacteurs nucléaires. Cet effet à une cinétique temporelle rapide, c'est l'un des effets qui agit en premier dès lors qu'un transitoire de puissance se présente.

Le coefficient de vide, mentionné plus haut, caractérise l'évolution de la réactivité du réacteur en cas de diminution de la densité du fluide caloporteur qui ici est de l'eau. Au sens de la physique des réacteurs, la réactivité mesure la tendance du réacteur à augmenter sa puissance (état surcritique), la diminuer (état sous critique), ou se maintenir à l'état stable (état critique). Le coefficient de vide entre dans la composition de la réactivité d'un cœur de réacteur nucléaire. Les réacteurs à eau sous pression sont conçus de sorte que l'eau est à la fois caloporteur et modérateur de neutrons (autrement dit ralentisseur de neutrons) attribuant aux réacteurs un coefficient de vide négatif, ce qui est recherché. En effet, un coefficient de vide négatif correspond à un effet auto-stabilisant de la réaction nucléaire : si la puissance neutronique augmente, la densité de l'eau diminue, ce qui a pour effet de diminuer la densité du modérateur (l'eau est à la fois caloporteur et modérateur), donc de diminuer la probabilité de choc du neutron par réaction de diffusion sur une molécule d'eau, d'où un moindre ralentissement neutronique, d'où une diminution du nombre de fissions et consécutivement de la puissance.

L'utilisation des cinq variables de puissance, température moyenne d'une cuve du réacteur, déséquilibre axial de puissance DPAX, concentration dans le fluide caloporteur en une espèce chimique configurée pour absorber des neutrons dans le réacteur et position d'un dispositif configuré pour absorber des neutrons dans le réacteur permet de décrire la stabilité du réacteur en général. L'utilisation des autres variables mentionnées ci-avant en plus ou en remplacement des cinq variables permet de décrire la stabilité d'autres organes du réacteur comme par exemple le Cœur actif du réacteur, le générateur de vapeur, le circuit Primaire ou le Circuit secondaire...

Pour l'exemple du Cœur actif, les grandeurs d'intérêt à stabiliser sont les champs tridimensionnels des paramètres usuels de contre-réactions neutroniques, à savoir les grandeurs physiques qui agissent sur les sections efficaces macroscopiques du calcul de physique des réacteurs (entre autres le calcul de la puissance tridimensionnelle dans le cœur). On rappelle que la section efficace est une grandeur dont l'unité est le barn ($10^{-24}$ cm$^2$) mesurant la capacité ou le taux de réaction d'un noyau (section microscopique) ou d'un ensemble de noyaux (section macroscopique ; produit de la section microscopique par la densité des noyaux considérés du même élément) d'entrer en interaction avec un neutron, lesdites interactions sont l'absorption, la fission, la diffusion. Pour une interaction donnée, plus la section efficace d'un noyau est grande plus ledit taux de réaction avec un neutron est grand. Les paramètres en question sont les champs tridimensionnels suivants : la masse volumique de l'eau dans le cœur, la température effective du combustible, la température de l'eau dans le cœur, la répartition de bore dans le cœur, la répartition de xénon 135 dans le cœur et la répartition de samarium 149 dans le cœur. Ces grandeurs sont normalisées par rapport à un ordre de grandeur typique de telle façon qu'un incrément homogène de référence du champ 3D produise une valeur typique du CCS (par exemple 30 *millidP* de stabilité sur l'Axial-Offset). Des poids de pondération relevant de l'analyse de base de données d'exploitation des cœurs de réacteurs permettent de calculer un critère composite de la même façon que le CCS précédemment décrit en rapport avec la stabilité du réacteur en général et les cinq variables. L'usage du paramètre de stabilité en rapport avec le Cœur actif permet de façon non exhaustive :

- d'indiquer de façon très visuelle à l'opérateur que le composant observé est « stable »; le cœur est notamment stable lorsque l'opérateur ne change rien et que les grandeurs caractéristiques gardent la même valeur sur quelques heures voire quelques jours c'est à dire lorsqu'il n'y a pas de transitoire en cours, et notamment pas de transitoire de puissance ni d'oscillation xénon ;
- d'utiliser les valeurs numériques du paramètre de stabilité pour accélérer les calculs par exemple en augmentant le pas de temps du code de cœur sur critère de stabilité ; d'éviter de recalculer les sections efficaces, un poste de calcul très conséquent dans l'ensemble d'un calcul de cœur ; d'éviter des impressions inutiles, voire coûteuses en temps calcul, sur critère de stabilité ;
- de contribuer à l'élaboration d'un paramètre de stabilité correspondant à l'ensemble de la tranche nucléaire ; et
- d'indiquer quel composant est instable dans un ensemble multi-composants...

Dans le cas où le système industriel est un réacteur nucléaire, et en rapport avec la deuxième étape, le paramètre de stabilité ou Critère Composite de Stabilité s'écrit alors sous la forme d'une somme de 5 taux de variations des 5 variables.

Dans le cas où le système industriel est un réacteur nucléaire, et en rapport avec la troisième étape, la durée prédéterminée qui intervient dans l'application du procédé peut être donné sur la base du phénomène d'instabilité de l'oscillation xénon. Le temps caractéristique d'oscillation étant compris entre 15 et 35 heures, on peut choisir une durée prédéterminée comprise entre 3 et 15 heures.

Dans le cas où le système industriel est un réacteur nucléaire, et en rapport avec la quatrième étape, l'estimateur 7 comprend un code de calcul neutronique afin de simuler le comportement du cœur nucléaire.

Ce code intègre des implémentations des équations de la physique nucléaire et des solveurs numériques pour les résoudre. Le code utilise une modélisation 3D du réacteur pour réaliser les calculs. Cet aspect 3D peut aussi bien correspondre à une modélisation explicite en trois dimensions du cœur dans le code de calcul, comme c'est le cas dans le procédé ici présenté, qu'à une modélisation en deux dimensions (en règle générale, un cœur ramené à un plan radial) suivi d'un déploiement des résultats dans la direction axiale (on a alors une approche 2D x 1D).

Les paramètres physiques introduits sont calculés par le code de calcul neutronique qui est plus précisément un code de physique des réacteurs nucléaires dont on expose maintenant les grands principes.

Le code 3D de physique des réacteurs nucléaires est compris ici comme un logiciel configuré pour calculer la répartition tridimensionnelle de la puissance (en Watt) dans un cœur de réacteur nucléaire à partir de données structurelles (géométrie, composition chimique, composition en noyaux lourds, etc.).

Pour ce faire, le logiciel doit pouvoir par exemple en géométrie tridimensionnelle calculer la répartition des températures du caloporteur dans le cœur du réacteur. Le caloporteur est le fluide qui évacue la chaleur produite par les fissions nucléaires. Ce calcul peut être notamment effectué par un module du code appelé « module thermohydraulique ».

Le logiciel doit pouvoir également calculer la répartition des températures du combustible nucléaire. Ce calcul peut être notamment effectué par un module du code appelé « module thermique » ou « module thermomécanique » si des aspects mécaniques sont en plus traités (exemple l'interaction pastille-gaine).

Le logiciel doit pouvoir également calculer la répartition du flux neutronique d'où dérive la puissance. Ce calcul peut être notamment effectué par un module appelé « module neutronique ».

C'est l'interaction couplée de ces trois modules ci-dessus qui permet de calculer la puissance 3D dans le cœur du réacteur.

La neutronique modifie les températures du caloporteur, la température du caloporteur modifie les températures du combustible. Les températures du modérateur et du combustible modifient la neutronique. En effet une fission (physique nucléaire) est provoquée par une interaction d'un noyau lourd avec des neutrons (gérés par le module neutronique), ladite fission produisant de la chaleur qui se propage dans la matière (gérée par le module thermique), celle-ci transmettant ses calories à l'eau, le caloporteur, qui les transportent en élevant sa température (géré par le module thermohydraulique) et modifie par conséquent la température du combustible.

On observe alors des phénomènes de contre-réactions. L'eau caloporteur étant aussi le modérateur par lequel les neutrons sont ralentis pour favoriser les fissions, sa variation de température modifiera sa densité donc le ralentissement neutronique ce qui impacte donc la future génération de fissions. En même temps, une modification de température du combustible accroit les réactions d'absorptions de neutrons, notamment dans l'Uranium 238, ce qui modifie la neutronique.

Ainsi, les phénomènes physiques précités qui se produisent au sein d'un réacteur nucléaire sont d'une grande complexité, ce qui nécessite de faire appel à des codes de calculs de la physique des cœurs. Par exemple, il est possible d'utiliser un code de calcul qui comporte :

- un module thermohydraulique 1D axial dans le canal contenant le caloporteur eau,

- un module thermique 1D radial dans le barreau combustible cylindrique, et

- un module de neutronique 3D en théorie de la diffusion neutronique.

La diffusion neutronique est un modèle théorique utilisé pour traiter une forme simplifiée de l'équation de Boltzmann qui régit le comportement des neutrons dans la matière. On trouvera des descriptions des modèles théoriques dans les références en langue française « La physique des réacteurs nucléaires, 3ème édition » (auteur Serge Marguet, ISBN 978-2-7430-1105-5, édition Lavoisier) et en langue anglaise « The physics of nuclear reactors » (auteur Serge Marguet, ISBN 978-3-319-59558-7, édition Springer). D'autres ouvrages de référence, plus anciens présentent les principes fondamentaux de la physique des réacteurs nucléaires tel que le « Traité de Neutronique » de Jean Bussac et Paul Reuss aux éditions HERMANN ISBN 2-705-6011-9 - seconde édition, 1985.

Pour obtenir des estimations des variables satisfaisantes, il peut être intéressant d'effectuer plusieurs itérations pour évaluer l'ensemble à l'équilibre. Une fois la convergence obtenue, le code de physique des réacteurs peut produire des résultats nécessaires pour l'exploitation et la sûreté du réacteur, en fournissant une aide considérable au pilotage d'un cœur de réacteur nucléaire, et notamment pour la localisation et valeurs des points chauds, une répartition « intelligente » de la puissance, des réponses calculées des instrumentations diverses du cœur, un pilotage et une stabilité du réacteur en fonction du temps, une irradiation des combustibles nucléaires (évaluation des burn-up), et la Distribution tridimensionnelle du Xénon 135 .

Dans le cas où le système industriel est un réacteur nucléaire, et en rapport avec la quatrième étape, la variable particulière que l'on choisit pour mettre en œuvre le procédé est le déséquilibre axial de puissance qui est particulièrement pertinent pour estimer la stabilité du réacteur.

Dans le cas où le système industriel est un réacteur nucléaire, et en rapport avec la cinquième étape, le paramètre de recalage peut être choisi comme un paramètre $\delta_0$ intervenant dans la définition des coefficients de diffusion des neutrons rapides au sein du réacteur en limite supérieure et en limite inférieure selon l'axe vertical z du réacteur. Les neutrons rapides correspondent à la population la plus énergétique des neutrons générés dans le réacteur.

En rapport avec ces coefficients, on définit le coefficient de diffusion en limite supérieure du réacteur $D_{1,sup\ ref}$ fourni par l'estimateur au cours d'une première estimation, le coefficient de diffusion en limite inférieure du réacteur $D_{1,inf\ ref}$ fourni par l'estimateur au cours de la première estimation, des coefficients de diffusion en limite supérieure et inférieure du réacteur $D_{1,sup}$ $D_{1,inf}$ corrigés en utilisant le paramètre de recalage $\delta_0$.

La correction se fonde sur les relations suivantes :

$$D_{1,sup}=(2 - \delta_0 - \beta_p(P-P_{nom}))\ D_{1,sup\ ref}$$

$$D_{1,inf}=(\delta_0+\beta_p(P-P_{nom}))\ D_{1,inf\ ref}$$

P désigne la puissance du réacteur et $P_{nom}$ la puissance nominale du réacteur, le paramètre $\beta_p$ est un coefficient de correction prédéterminé qui ne dépend que de la puissance P.

En comparant l'estimation du déséquilibre axial estimé et du déséquilibre axial mesuré, on peut trouver la valeur du paramètre $\delta_0$ qui permet, en corrigeant les coefficients de diffusion selon les relations précédentes, de recalibrer l'estimateur. L'estimateur ainsi recalibré fournit alors des estimations du déséquilibre axial qui correspondent mieux aux mesures.

La réflexion des neutrons en limite supérieure et en limite inférieure fait partie des limites de modélisation de la diffusion neutronique dans le réacteur.

L'erreur commise est d'autant plus importante que l'écart à la puissance nominale du réacteur est important. La partie de l'erreur commise dans les estimations qui provient de cet écart à la puissance nominale est prise en compte par le terme $\beta_p(P-P_{nom})$ qui s'annule lorsque l'écart à la puissance nominale est nul.

Le reste de l'erreur commise est prise en compte par le terme $\delta_0$, terme qui est plus en rapport avec l'historique de pilotage non pris en compte dans la modélisation par ailleurs.

La figure 2 illustre l'effet du procédé sur la précision des estimations fournies. La figure 2 représente trois courbes 21, 22 et 23 du déséquilibre axial DPAX au cours du temps. La courbe 21 représente un déséquilibre axial DPAX mesuré. Les courbes 22 et 23 représentent un déséquilibre axial DPAX estimé effectuée par l'estimateur à t=0.

Pour la courbe 22, l'estimation a été réalisée par l'estimateur en utilisant la valeur d'un paramètre de recalage estimé en comparant une séquence d'estimations et de mesures successives du déséquilibre axial avec un début temporel de la séquence de mesures successives correspondant à un instant qui n'est compris dans un intervalle temporel de stabilité.

Pour la courbe 23, l'estimation correspond au procédé décrit plus haut. Elle a été réalisée par l'estimateur en utilisant la valeur d'un paramètre de recalage estimé en comparant une séquence d'estimations et de mesures successives du déséquilibre axial avec un début temporel de la séquence de mesures successives correspondant à un instant qui est compris dans un intervalle temporel de stabilité, à savoir l'intervalle temporel de stabilité plus récent.

La courbe 23 d'estimation est significativement plus proche de la courbe 21 de mesure que la courbe 21 d'estimation. En pratique, la courbe 23 fournit une estimation suffisamment précise pour permettre à l'opérateur d'appréhender sereinement la conduite à tenir, alors que la courbe 21 ne fournit pas une précision suffisante.

L'utilisation du paramètre de recalage déterminé sur la base de l'intervalle temporel de stabilité le plus récent fournit donc une meilleure précision dans l'estimation. On parle de paramètre de recalage 'vert'.

L'application du procédé au cas du réacteur nucléaire permet :

- un meilleur taux de réponse aux sollicitations du réseau (une meilleure précision dans les calculs permettant de ne pas écarter des transitoires de puissance à réaliser à cause de l'incertitude sur le respect des marges de sécurité),
- une meilleure optimisation des stratégies de pilotage (une meilleure précision dans les calculs permet d'anticiper avec plus de finesse les situations à venir, et d'élaborer avec plus de pertinence la stratégie optimale pour répondre au mieux aux contraintes économiques ou environnementales), et
- des gains économiques liés à l'atteinte au plus tôt de la stabilité du cœur lorsque cela est nécessaire (essais).

Le contexte général de l'énergie entraîne une demande accrue en manœuvrabilité des tranches nucléaires. En effet, les puissances installées d'énergies renouvelables augmentent. Celles-ci étant par nature intermittente, il sera de plus en plus demandé aux tranches nucléaires de moduler leur production.

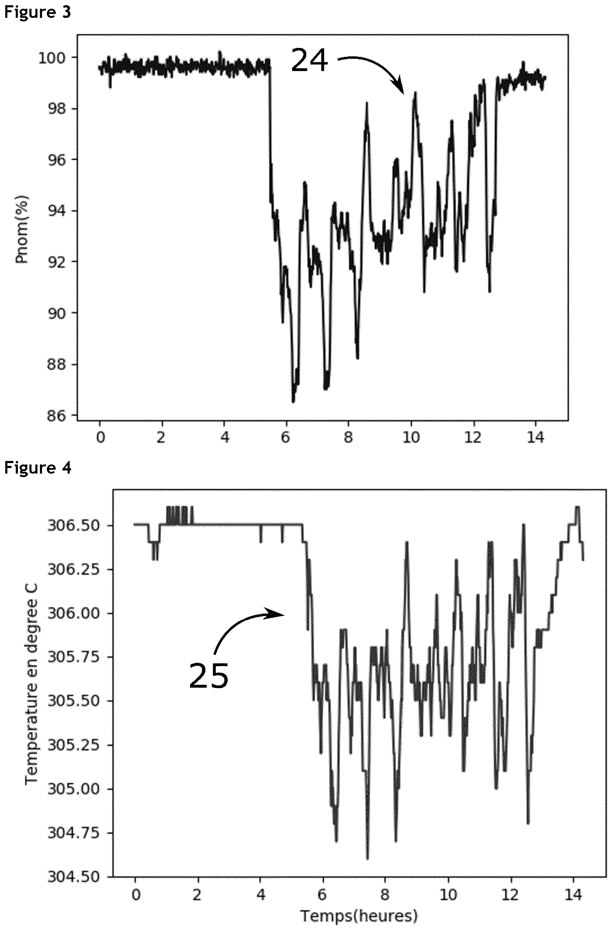

Les figures 3 à 9 illustrent un calcul du paramètre de stabilité pour une plage temporelle d'environ 15 heures. Chacune des figures représente les variations d'une variable au cours de cette plage temporelle de sorte que le temps est reporté en abscisse sur un axe gradué en heures.

La figure 3 représente une courbe 24 de puissance normalisée, l'axe vertical est gradué en pourcentage de la puissance nominale.

La figure 4 représente une courbe 25 de température, l'axe vertical est gradué en degré Celsius.

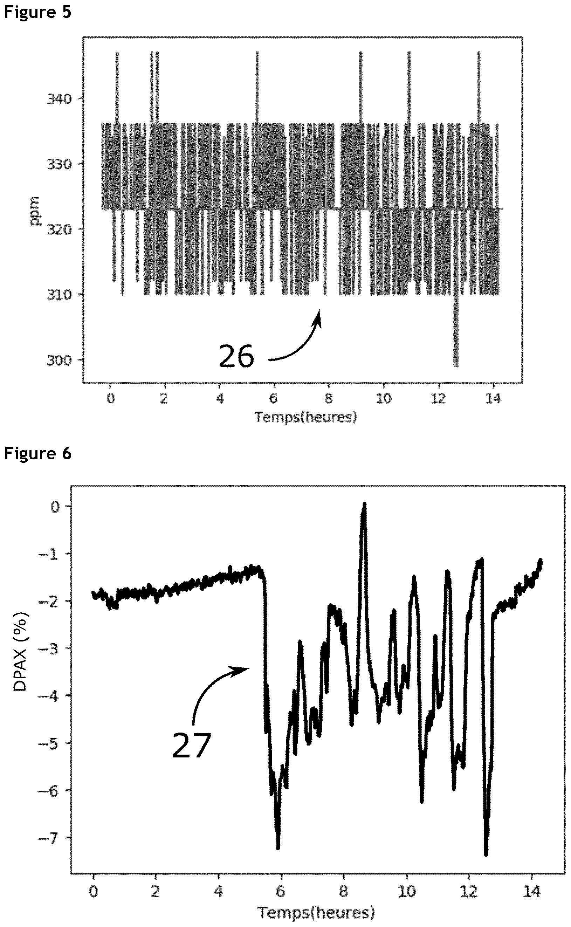

La figure 5 représente une courbe 26 de concentration en Bore, l'axe vertical est gradué en ppm.

La figure 6 représente une courbe 27 de déséquilibre axial de puissance, l'axe vertical est gradué en pourcentage (le DPAX est calculé comme un rapport de puissances, donc sans unité. Il s'exprime en pourcentage).

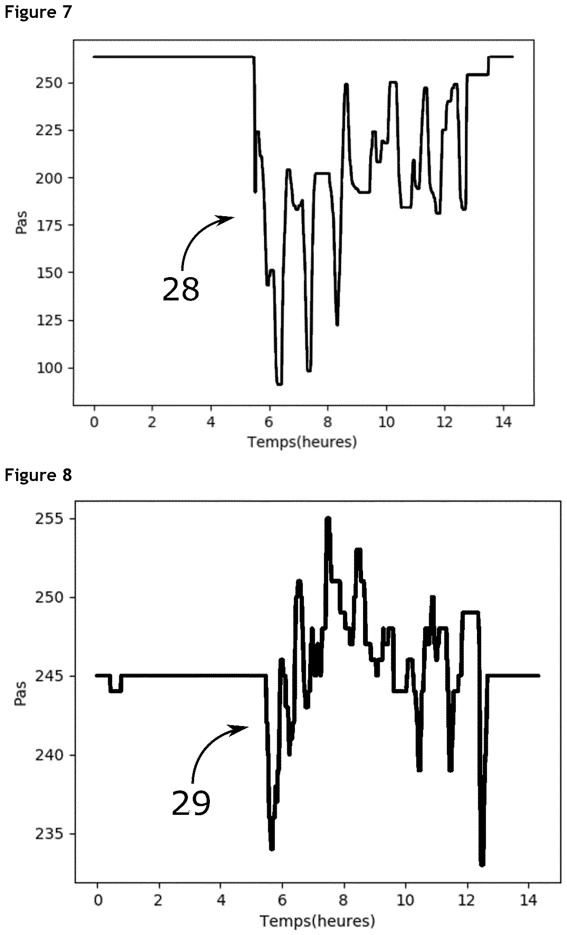

La figure 7 représente une courbe 28 de position d'un premier dispositif, qui est une première unité « G1 » du groupe GCP d'absorption de neutrons, l'axe vertical est gradué en pas qui correspond à une longueur : un pas vaut 1,5 centimètre. L'insertion et l'extraction des barres sont mises en œuvre de manière discrète de sorte que les barres ne peuvent prendre qu'une série de positions axiales discrètes. Chaque insertion (respectivement extraction) d'une barre se fait par déplacement vers le bas (respectivement vers le haut) d'une longueur fixe de l'ordre de 1.5 cm, ce qui définit un pas.

La figure 8 représente une courbe 29 de position d'un deuxième dispositif d'absorption de neutrons, le groupe de régulation R, l'axe vertical est gradué en pas. Le pas est défini ici de la même manière que précédemment.

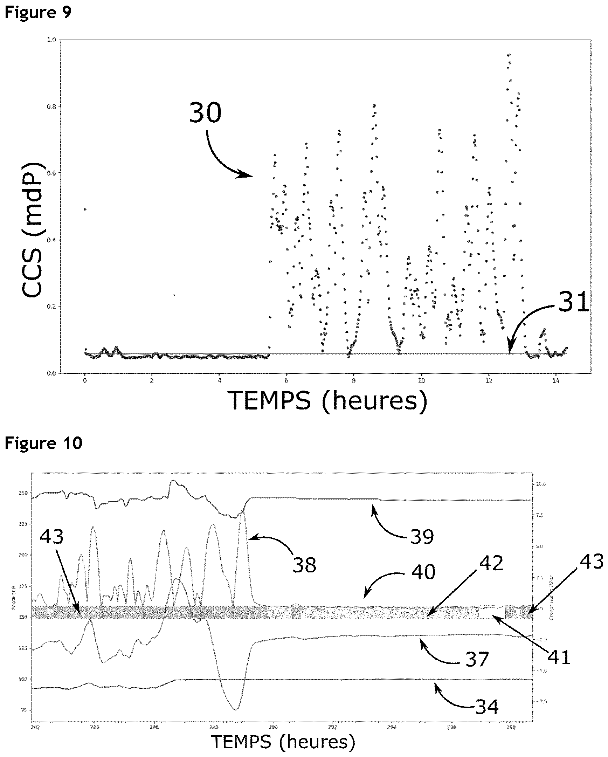

La figure 9 représente un nuage de points 30 représentant le paramètre de stabilité en fonction du temps. Le paramètre de stabilité est déterminé à partir des variables précédentes, l'axe vertical est gradué en dP. La droite 31 représente le seuil prédéterminé égal ici à 30 mdP.

La figure 9 montre une forte volatilité de la valeur numérique du paramètre de stabilité dès que des actions sont réalisées par l'opérateur (par exemple, les mouvements de grappes d'absorbant à partir de 6 heures sur les courbes précédentes). Ceci a été voulu dans la conception du paramètre de stabilité. A l'inverse, le passage sous un seuil donné, pour une durée donnée choisie, permet de garantir la stabilité du réacteur.

Sur le cas présenté dans ces figures, il n'y a pas d'intervalle temporel de stabilité, c'est-à-dire de phase temporelle où le paramètre de stabilité reste en dessous du seuil prédéterminé plus longtemps que la durée prédéterminée. Autrement dit, il n'y pas de stabilité suffisante pour une détermination du paramètre de recalage. Si l'on souhaite mettre en œuvre le procédé, le paramètre de recalage à utiliser pour une estimation devra donc être issu d'une phase de stabilité précédente. S'il n'y en a pas encore eu, par exemple dans le cas d'un démarrage du cœur, il est possible d'utiliser un paramètre par défaut qui est équivalent à une absence de recalage, ce qui permet une prédictivité correcte. En effet, le modèle de recalage a pour principal objectif de compenser des effets d'historique qui sont, de fait, limités lorsque le réacteur fonctionne depuis peu de temps. Des phases de stabilité « obligatoires » sont requises pour la réalisation d'essais périodiques. Les paramètres de recalage auront ainsi un minimum de plages adéquates pour être déterminés.

Le paramètre de stabilité peut être fourni à l'opérateur pour lui signaler du niveau de stabilité du réacteur actuel ou de niveaux de stabilité passés. En rapport avec la figure 1, un dispositif d'interaction humain machine 10 permet d'afficher le paramètre de stabilité calculé par l'unité de traitement 6. Une connexion 11 entre le dispositif d'interaction humain machine 10 et l'unité de traitement 6 permet de transférer cette information.

La figure 10 illustre un calcul du paramètre de stabilité pour une plage temporelle d'environ 16 heures. Le temps est reporté en abscisse sur un axe gradué en heures. La courbe 34 représente la puissance, la courbe 37 le déséquilibre axial de puissance, la courbe 38 la position d'un premier dispositif d'absorption de neutrons, et la courbe 39 la position d'un deuxième dispositif d'absorption de neutrons, le groupe de régulation R. Enfin la bande 40 représente le paramètre de stabilité. Le niveau de gris de la bande 40 est déterminé de la manière suivante :

- le niveau de gris 41 correspond aux intervalles temporels de stabilité, où le paramètre de stabilité est inférieur au seuil depuis une durée supérieure ou égale à la durée prédéterminée ; le niveau de gris 41 correspond à un état stable du réacteur ;
- le niveau de gris 42 correspond aux intervalles où le paramètre de stabilité est inférieur au seuil mais depuis une durée inférieure à la durée prédéterminée ; le niveau de gris 42 correspond à un état en cours de stabilisation du réacteur ;et
- le niveau de gris 43 correspond aux intervalles où le paramètre de stabilité est supérieur au seuil ; le niveau de gris 43 correspond à un état instable du réacteur.

Un tel affichage du paramètre de stabilité sur le dispositif d'interaction humain machine 10 permet à l'opérateur selon le niveau de gris ou bien selon le code couleur vert (stable) / orange (en cours de stabilisation) / rouge (non stable) d'apprécier immédiatement l'état de la tranche. Cela peut être une aide, par exemple, au lancement de certains essais nécessitant un point de départ suffisamment stable.

Dans cet exemple, une manœuvre du réacteur est effectuée dans une première partie à gauche de la courbe correspondant à un paramètre de sécurité indiquant le plus souvent un état instable du réacteur (zones à niveau de gris 42). La deuxième partie, une fois la manœuvre achevée, permet de visualiser un état en cours de stabilisation du réacteur (zones à niveau de gris 42) puis un état stable du réacteur. Cette visualisation permet à l'opérateur de s'assurer de lancer un essai prévu ou une nouvelle manœuvre lorsque le réacteur est dans un état stable.

L'estimation de la valeur future de la grandeur physique du système peut aussi prendre en compte un scénario de commande du réacteur correspondant à une séquence d'au moins une variable contrôlable par un opérateur.

Une variable contrôlable peut être une consigne de puissance, la position d'un dispositif configuré pour absorber des neutrons dans le réacteur, un débit du fluide caloporteur ou encore la concentration en une espèce chimique dans le fluide caloporteur. Une consigne de puissance ou un programme de charge est une évolution de la puissance électrique du réacteur en fonction du temps. Cette évolution peut notamment être donnée sous la forme d'une séquence de valeurs successives d'une puissance à respecter, c'est-à-dire de valeurs d'une consigne de puissance, en fonction du temps. Une consigne de puissance est donc ici entendue comme une grandeur physique homogène à une puissance et qui est la puissance à respecter.

L'opérateur peut définir un scénario de pilotage, c'est-à-dire les différentes actions qu'il envisage de réaliser. Celles-ci sont relatives aux variables contrôlables comme par exemple les positions des barres de contrôle ou la concentration en Bore. L'opérateur choisit pour au moins une variable contrôlable une séquence de valeurs successives que prend la variable au cours des prochaines heures.

L'opérateur entre alors les données caractérisant le scénario en entrée de l'estimateur 7 via une connexion 12 entre l'estimateur 7 et le dispositif d'interface humain machine, comme illustré en figure 1.

Par exemple, l'opérateur peut se fonder sur une première estimation de l'évolution du déséquilibre axial de puissance sans qu'un scénario ne soit précisé et sur la base de cette simulation, il détermine un scénario et relance une deuxième estimation de l'évolution du déséquilibre axial de puissance qui cette fois prend en compte le scénario déterminé. Les première et deuxième estimations sont transmises via une connexion 13 depuis l'estimateur 7 vers le dispositif d'interface humain machine 10, comme illustré en figure 1.

Le procédé tel qu'on l'a présenté peut également comprendre une étape d'estimation de valeurs futures des variables de la pluralité de variables du système et une étape de détermination d'une valeur future du paramètre de stabilité à partir des valeurs futures des variables de la pluralité de variables du système.

Pour cela, c'est chaque variable de la pluralité de variables qui est la grandeur physique dont le procédé estime une valeur future.

Un premier avantage du procédé ainsi modifié est d'identifier de possibles futures plages de stabilité du réacteur. Lorsque le paramètre de stabilité estimé est inférieur ou égal au seuil prédéterminé depuis la durée prédéterminée, un intervalle temporel de stabilité commence. Il dure aussi longtemps que le paramètre de stabilité estimé reste inférieur ou égal au seuil prédéterminé.

Le deuxième avantage de ce procédé est de résoudre le problème de la première valeur des estimations qui est différente de la mesure correspondante.

Comme évoqué précédemment, lorsque le temps t=0, correspondant au moment où l'estimation est produite, ne fait pas partie d'un intervalle temporel de stabilité, il y a un risque que les premières valeurs des estimations soient significativement différentes des premières mesures. Pour garantir que les premières valeurs des estimations soient sensiblement identiques aux premières mesures on peut modifier le procédé de la manière suivante.

Le paramètre de recalage pour estimer la première valeur est le paramètre de recalage local, c'est-à-dire associé au temps d'estimation temps t=0. Le paramètre de recalage local est déterminé en comparant une séquence d'estimations et de mesures successives du déséquilibre axial avec un début temporel de la séquence de mesures successives correspondant à un temps juste précédent au temps t=0.

Pour estimer les valeurs suivantes, on conserve le paramètre de recalage local tant que le paramètre de stabilité estimé reste significativement constant. Le paramètre de stabilité utilisé à cette fin est estimé à partir des valeurs estimées des variables de la pluralité de variables.

Si le paramètre de stabilité varie, alors on remplace le paramètre de recalage local par un paramètre de recalage mixte qui se calcule en prenant en compte le paramètre de recalage local et le paramètre de recalage 'vert'. Autrement dit le paramètre de recalage local se fonde à la fois sur une comparaison d'une séquence d'estimations et de mesures successives du déséquilibre axial avec un début temporel de la séquence de mesures successives correspondant à un temps juste précédent au temps t=0, et à la fois sur une comparaison d'une séquence d'estimations et de mesures successives du déséquilibre axial avec un début temporel de la séquence de mesures successives correspondant à un instant qui est compris dans l'intervalle temporel de stabilité le plus récent.

On effectue donc au fur à mesure des itérations dans l'estimation une transition du paramètre de recalage local vers le paramètre de recalage 'vert' lorsque le paramètre de stabilité varie. En effet, le paramètre de recalage local, adapté à une situation du réacteur présentant un certain niveau d'instabilité, ne sont plus valables lorsque ce niveau d'instabilité varie, et il est alors nécessaire de récupérer les paramètres de recalage verts. Ce « niveau d'instabilité » est naturellement accessible par calcul du CCS.

Grâce à cette modification, le procédé permet d'assurer une simulation prospective :

- dont le démarrage est en accord avec les mesures expérimentales
- dont le déroulé reste prédictif grâce au paramètre de recalages 'vert' idéalement déterminés grâce au CCS.

Le procédé peut en outre comprendre une étape de détermination d'un score du scénario de commande. Ce score peut être une valeur d'une grandeur choisie parmi un volume d'effluent produits, un écart moyen au déséquilibre axial de référence et une distance moyenne à des limites d'un domaine de fonctionnement du réacteur.

Les opérateurs s'appuient sur ce diagramme de pilotage représentant le déséquilibre axial en fonction de la puissance totale instantanée. Ce diagramme illustre en particulier une zone de sécurité ou domaine de fonctionnement du réacteur qui est une zone autour d'une droite de référence. Le déséquilibre axial de référence correspond à cette droite de référence. Le réacteur doit fonctionner dans la zone proche de la droite de référence.

Le domaine de fonctionnement du réacteur et donc les limites de ce domaine sont également définies en rapport avec le diagramme de pilotage. Ce domaine de fonctionnement est une zone de sécurité qui se situe autour de la droite de référence. Il peut être par exemple défini par des droites de déséquilibres axiaux limites dans le diagramme. La distance moyenne aux limites peut être évaluée comme la distance à l'un de ces droites de déséquilibres axiaux limites.

Le score du scénario permet de fournir à l'opérateur une évaluation du scénario estimé par rapport à des critères de production d'effluent qui nécessiteront un traitement particulier ou des critères de stabilité du réacteur.

Il est possible de mettre en œuvre une estimation de deux scénarios que l'opérateur compare ensuite sur la base de leurs scores respectifs. Dans ce cas :

- le scénario de commande mentionné précédemment est alors un premier scénario de commande,

- un deuxième scénario est obtenu et transmis en entrée du procédé, ce deuxième scénario correspond à une séquence d'au moins une variable contrôlable par un opérateur, séquence différente de celle qui correspond au premier scénario, et

- l'étape d'estimation de la valeur future de la grandeur physique du système étant réalisée une seconde fois en remplaçant le premier scénario par le deuxième scénario.

Avantageusement, le procédé comprend une étape de comparaison des scores du premier scénario et du deuxième scénario.

Il est à noter que les différentes courbes correspondant aux différents scénarios estimés peuvent être affichées sur le même graphe pour pouvoir être comparées visuellement par l'opérateur.

Lorsque le procédé comprend une étape de comparaison des scores du premier scénario et du deuxième scénario, le procédé peut en outre fournir un classement des scénarios par ordre croissant pour le critère retenu ou si plusieurs critères ont été calculés chacun de ces critères.

En référence à la figure 1, c'est le dispositif 20 d'aide à la décision qui peut fournir ce classement des scénarios dont les estimations sont effectuées par l'estimateur 7.

Une fois que le scénario est choisi par l'opérateur, celui-ci peut envoyer les consignes correspondantes au centre de commande 3 du système 1, par exemple via la connexion 14 entre le dispositif d'interface humain machine 10 et le centre de commande 3, comme illustré en figure 1.

Un objet de l'invention est un programme d'ordinateur comprenant des instructions adaptées à la mise en œuvre d'au moins une des étapes du procédé tel qu'on a pu le présenter jusqu'à présent lorsque ledit programme est exécuté sur un ordinateur.

En rapport avec la figure 1, un objet de l'invention est un dispositif d'estimation 20 d'une valeur future d'une grandeur physique d'un système industriel 1, le dispositif 20 étant configuré pour mettre en œuvre le procédé tel qu'on l'a présenté jusqu'à maintenant, le dispositif 20 comprenant une unité de traitement 6 configuré pour

- pour chaque variable de la pluralité de variables du système, obtenir les séries temporelles de mesures de variables du système, une séquence de mesures successives de la variable, chaque variable étant associée à une variable normalisée définie comme le rapport de la variable à une valeur de référence, et normaliser la séquence des mesures successives de sorte à obtenir une séquence de mesures successives de la variable normalisée,

- déterminer le paramètre de stabilité du système de sorte à obtenir une séquence de valeurs successives du paramètre de stabilité, le paramètre de stabilité étant une somme pondérée par des coefficients prédéterminés de taux de variation des variables normalisées,

- identifier l'intervalle temporel de stabilité le plus récent dans lequel pour chaque point de l'intervalle le paramètre de stabilité est inférieur ou égal à un seuil prédéterminé depuis une durée supérieure ou égale à une durée prédéterminée

  le dispositif comprenant en outre l'estimateur 7 configuré pour estimer pour une variable particulière de la pluralité des variables une partie de la séquence de mesures successives de la variable particulière, de sorte à obtenir une séquence d'estimations successives de la variable particulière, un début temporel de la séquence de mesures successives correspondant à un instant compris dans l'intervalle temporel,

  l'unité de traitement 6 étant configurée pour comparer la séquence d'estimations successives et la partie de la séquence de mesures successives de sorte à déterminer une valeur d'un paramètre de recalage, le paramètre de recalage étant configuré pour être utilisé par l'estimateur pour améliorer l'estimation,

  l'estimateur 7 étant configuré pour estimer la valeur future de la grandeur physique en utilisant la valeur du paramètre de recalage.

## Revendications

1. Procédé d'estimation d'une valeur future d'une grandeur physique d'un système industriel (1), le procédé comprenant les étapes suivantes mises en œuvre par un dispositif d'estimation :

   - pour chaque variable d'une pluralité de variables du système, obtention d'une séquence de mesures successives de la variable, chaque variable étant associée à une variable normalisée définie comme le rapport de la variable à une valeur de référence, et normalisation de la séquence des mesures successives de sorte à obtenir une séquence de mesures successives de la variable normalisée,
   - détermination d'un paramètre de stabilité du système de sorte à obtenir une séquence de valeurs successives du paramètre de stabilité, le paramètre de stabilité étant une somme pondérée par des coefficients prédéterminés de taux de variation des variables normalisées,
   - identification d'un intervalle temporel de stabilité le plus récent dans lequel pour chaque point de l'intervalle le paramètre de stabilité est inférieur ou égal à un seuil prédéterminé depuis une durée supérieure ou égale à une durée prédéterminée,
   - estimation pour une variable particulière de la pluralité des variables d'une partie de la séquence de mesures successives de la variable particulière, de sorte à obtenir une séquence d'estimations successives de la variable particulière, un début temporel de la séquence de mesures successives correspondant à un instant compris dans l'intervalle temporel, l'estimation étant effectuée par un estimateur (7) du dispositif d'estimation,
   - comparaison de la séquence d'estimations successives et de la partie de la séquence de mesures successives de sorte à déterminer une valeur d'un paramètre de recalage, le paramètre de recalage étant configuré pour être utilisé par l'estimateur pour améliorer l'estimation, et
   - estimation de la valeur future de la grandeur physique du système (1) par l'estimateur (7) en utilisant la valeur du paramètre de recalage.

2. Procédé selon la revendication 1 comprenant en outre une étape de relevé au cours du temps de mesures successives des variables de sorte à obtenir les séquences de mesures successives.

3. Procédé selon l'une quelconque des revendications 1 à 2 dans lequel, le système industriel étant un réacteur nucléaire, la pluralité de variables physiques comprend

   - une puissance du réacteur,
   - une température moyenne d'une cuve du réacteur,
   - un déséquilibre axial de puissance
   - une concentration en une espèce chimique dans un fluide caloporteur circulant dans le réacteur, l'espèce chimique étant configurée pour absorber des neutrons dans le réacteur, et
   - une position d'un dispositif configuré pour absorber des neutrons dans le réacteur,
   la variable particulière étant le déséquilibre axial de puissance.

4. Procédé selon la revendication 3 dans lequel l'estimation de la valeur future de la grandeur physique du système prend en compte un scénario de commande du réacteur correspondant à une séquence de valeurs successives d'au moins une variable contrôlable par un opérateur.

5. Procédé selon la revendication 4 comprenant une étape d'estimation de valeurs futures des variables de la pluralité de variables du système et une étape de détermination d'une valeur future du paramètre de stabilité à partir des valeurs futures des variables de la pluralité de variables du système.

6. Procédé selon l'une quelconque des revendications 4 à 5 comprenant en outre une étape de détermination d'un score du scénario de commande, le score étant une valeur d'une grandeur choisie parmi un volume d'effluent produits, un écart moyen au déséquilibre axial de référence et une distance moyenne à des limites d'un domaine de fonctionnement du réacteur.

7. Procédé selon l'une quelconque des revendications 4 à 6, dans lequel le scénario de commande est un premier scénario de commande, l'estimation de la valeur future de la grandeur physique du système étant réalisée une seconde fois en remplaçant le premier scénario par un deuxième scénario de commande du réacteur correspondant à une autre séquence de valeurs successives d'au moins une variable contrôlable, le procédé comprenant de préférence une étape de comparaison des scores du premier scénario et du deuxième scénario.

8. Programme d'ordinateur comprenant des instructions adaptées à la mise en œuvre d'au moins une des étapes du procédé selon l'une quelconque des revendications 1 à 7 lorsque ledit programme est exécuté sur un ordinateur.

**9.** Dispositif d'estimation (20) d'une valeur future d'une grandeur physique d'un système industriel (1), le dispositif (20) étant configuré pour mettre en œuvre le procédé selon l'une des revendications 1 à 7, le dispositif comprenant une unité de traitement (6) configuré pour

- pour chaque variable de la pluralité de variables du système, obtenir les séries temporelles de mesures de variables du système (1), une séquence de mesures successives de la variable, chaque variable étant associée à une variable normalisée définie comme le rapport de la variable à une valeur de référence, et normaliser la séquence des mesures successives de sorte à obtenir une séquence de mesures successives de la variable normalisée,
- déterminer le paramètre de stabilité du système de sorte à obtenir une séquence de valeurs successives du paramètre de stabilité, le paramètre de stabilité étant une somme pondérée par des coefficients prédéterminés de taux de variation des variables normalisées,
- identifier l'intervalle temporel de stabilité le plus récent dans lequel pour chaque point de l'intervalle le paramètre de stabilité est inférieur ou égal à un seuil prédéterminé depuis une durée supérieure ou égale à une durée prédéterminée

le dispositif comprenant en outre l'estimateur (7) configuré pour estimer pour une variable particulière de la pluralité des variables une partie de la séquence de mesures successives de la variable particulière, de sorte à obtenir une séquence d'estimations successives de la variable particulière, un début temporel de la séquence de mesures successives correspondant à un instant compris dans l'intervalle temporel,

l'unité de traitement étant configurée pour comparer la séquence d'estimations successives et la partie de la séquence de mesures successives de sorte à déterminer une valeur d'un paramètre de recalage, le paramètre de recalage étant configuré pour être utilisé par l'estimateur (7) pour améliorer l'estimation,

l'estimateur (7) étant configuré pour estimer la valeur future de la grandeur physique en utilisant la valeur du paramètre de recalage.

**Patentansprüche**

**1.** Verfahren zur Schätzung eines zukünftigen Wertes einer physikalischen Größe eines industriellen Systems (1), wobei das Verfahren die folgenden, von einer Schätzvorrichtung durchgeführten Schritte umfasst:

- für jede Variable einer Vielzahl von Variablen des Systems, Erhalten einer Sequenz aufeinanderfolgender Messungen der Variablen, wobei jede Variable einer normierten Variablen zugeordnet ist, die als das Verhältnis der Variablen zu einem Referenzwert definiert ist, und Normierung der Sequenz der aufeinanderfolgenden Messungen derart, dass eine Sequenz aufeinanderfolgender Messungen der normierten Variablen erhalten wird,
- Bestimmen eines Stabilitätsparameters des Systems derart, dass eine Sequenz aufeinanderfolgender Werte des Stabilitätsparameters erhalten wird, wobei der Stabilitätsparameter eine durch vorgegebene Koeffizienten der Änderungsraten der normierten Variablen gewichtete Summe ist,
- Identifizieren eines jüngsten zeitlichen Stabilitätsintervalls, in dem für jeden Punkt des Intervalls der Stabilitätsparameter seit einer Dauer, die größer oder gleich einer vorbestimmten Dauer ist, kleiner oder gleich einem vorbestimmten Schwellenwert ist,
- Schätzen für eine besondere Variable der Vielzahl von Variablen eines Teils der Sequenz aufeinanderfolgender Messungen der bestimmten Variablen derart, dass eine Sequenz aufeinanderfolgender Schätzungen der besonderen Variablen erhalten wird, wobei ein zeitlicher Beginn der Sequenz aufeinanderfolgender Messungen einem Zeitpunkt entspricht, der in dem Zeitintervall enthalten ist, wobei die Schätzung von einem Schätzer (7) der Schätzvorrichtung durchgeführt wird,
- Vergleichen der Sequenz aufeinanderfolgender Schätzungen und des Teils der Sequenz aufeinanderfolgender Messungen derart, dass ein Wert eines Rekalibrierungsparameters bestimmt wird, wobei der Rekalibrierungsparameter ausgelegt ist, um vom Schätzer verwendet zu werden, um die Schätzung zu verbessern, und
- Schätzen des zukünftigen Wertes der physikalischen Größe des Systems (1) durch den Schätzer (7) unter Verwendung des Wertes des Rekalibrierungsparameters.

**2.** Verfahren nach Anspruch 1, das ferner einen Schritt des Aufzeichnens aufeinanderfolgender Messungen der Variablen im Laufe der Zeit derart umfasst, dass die Sequenzen aufeinanderfolgenden Messungen erhalten werden.

**3.** Verfahren nach einem der Ansprüche 1 bis 2, wobei, wenn das industrielle System ein Kernreaktor ist, die Vielzahl physikalischer Variablen umfasst:

- eine Reaktorleistung,
- eine mittlere Temperatur eines Reaktorbehälters,
- ein axiales Leistungsungleichgewicht,
- eine Konzentration einer chemischen Spezies in einem Wärmeträgerfluid, das im Reaktor zirkuliert, wobei die chemische Spezies ausgelegt ist, um Neutronen im Reaktor zu absorbieren, und
- eine Position einer Vorrichtung, die ausgelegt ist, um Neutronen im Reaktor zu absorbieren,

wobei die besondere Variable das axiale Leistungsungleichgewicht ist.

4. Verfahren nach Anspruch 3, wobei die Schätzung des zukünftigen Wertes der physikalischen Größe des Systems ein Szenario der Steuerung des Reaktors berücksichtigt, das einer Sequenz aufeinanderfolgender Werte mindestens einer von einem Bediener steuerbaren Variablen entspricht.

5. Verfahren nach Anspruch 4, das einen Schritt des Schätzens zukünftiger Werte der Variablen der Vielzahl von Variablen des Systems und einen Schritt des Bestimmens eines zukünftigen Wertes des Stabilitätsparameters ausgehend von den zukünftigen Werten der Variablen der Vielzahl von Systemvariablen umfasst.

6. Verfahren nach einem der Ansprüche 4 bis 5, das ferner einen Schritt des Bestimmens eines Scores des Steuerungsszenarios umfasst, wobei der Score ein Wert einer Größe ist, die aus einem Volumen des erzeugten Abwassers, einer mittleren Abweichung von dem axialen Referenzungleichgewicht und einer mittleren Entfernung von den Grenzen eines Betriebsbereichs des Reaktors ausgewählt wird.

7. Verfahren nach einem der Ansprüche 4 bis 6, wobei das Steuerungsszenario ein erstes Steuerungsszenario ist, wobei die Schätzung des zukünftigen Wertes der physikalischen Größe des Systems ein zweites Mal durchgeführt wird, indem das erste Szenario durch ein zweites Steuerungsszenario des Reaktors ersetzt wird, das einer anderen Sequenz aufeinanderfolgender Werte mindestens einer steuerbaren Variablen entspricht, wobei das Verfahren vorzugsweise einen Schritt des Vergleichens der Scores des ersten Szenarios und des zweiten Szenarios umfasst.

8. Rechnerprogramm, das Anweisungen umfasst, die für die Durchführung mindestens einer der Schritte des Verfahrens nach einem der Ansprüche 1 bis 7 geeignet sind, wenn das Programm auf einem Computer ausgeführt wird.

9. Vorrichtung (20) zur Schätzung eines zukünftigen Wertes einer physikalischen Größe eines industriellen Systems (1), wobei die Vorrichtung (20) ausgelegt ist, um das Verfahren nach einem der Ansprüche 1 bis 7 durchzuführen, wobei die Vorrichtung eine Verarbeitungseinheit (6) umfasst, die ausgelegt ist, um

- für jede Variable der Vielzahl von Variablen des Systems die Zeitreihen von Messungen von Variablen des Systems (1) zu erhalten, eine Sequenz aufeinanderfolgender Messungen der Variablen, wobei jede Variable einer normierten Variablen zugeordnet ist, die als das Verhältnis der Variablen zu einem Referenzwert definiert ist, und die Sequenz der aufeinanderfolgenden Messungen derart zu normieren, dass eine Sequenz aufeinanderfolgender Messungen der normierten Variablen erhalten wird,
- den Stabilitätsparameter des Systems derart zu bestimmen, dass eine Sequenz aufeinanderfolgender Werte des Stabilitätsparameters erhalten wird, wobei der Stabilitätsparameter eine durch vorgegebene Koeffizienten der Änderungsraten der normierten Variablen gewichtete Summe ist,
- das jüngste zeitliche Stabilitätsintervall zu identifizieren, in dem für jeden Punkt des Intervalls der Stabilitätsparameter seit einer Dauer, die größer oder gleich einer vorgegebenen Dauer ist, kleiner oder gleich einem vorgegebenen Schwellenwert ist,

wobei die Vorrichtung ferner den Schätzer (7) umfasst, der ausgelegt ist, um für eine besondere Variable der Vielzahl von Variablen einen Teil der Sequenz aufeinanderfolgender Messungen der besonderen Variablen derart zu schätzen, dass eine Sequenz aufeinanderfolgender Schätzungen der bestimmten Variable erhalten wird, wobei ein zeitlicher Beginn der Sequenz aufeinanderfolgender Messungen einem Zeitpunkt entspricht, der in dem Zeitintervall enthalten ist, wobei die Verarbeitungseinheit ausgelegt ist, um die Sequenz aufeinanderfolgender Schätzungen und den Teil der Sequenz aufeinanderfolgender Messungen derart zu vergleichen, dass ein Wert eines Rekalibrierungsparameters bestimmt wird, wobei der Rekalibrierungsparameter ausgelegt ist, um vom Schätzer (7) zur Verbesserung der Schätzung verwendet zu werden, wobei der Schätzer (7) ausgelegt ist, um den zukünftigen Wert der physikalischen Größe unter Verwendung des Wertes des Rekalibrierungsparameters zu schätzen.

**Claims**

1. A method for estimating a future value of a physical quantity of an industrial system (1), the method comprising the following steps implemented by an estimation device:

   - for each variable of a plurality of variables of the system, obtaining a sequence of successive measures of the variable, each variable being associated with a normalised variable defined as the ratio of the variable to a reference value, and normalising the sequence of successive measures so as to obtain a sequence of successive measures of the normalised variable,
   - determining a stability parameter of the system so as to obtain a sequence of successive values of the stability parameter, the stability parameter being a sum weighted by predetermined coefficients of rate of variation of the normalised variables,
   - identifying a most recent stability time interval in which, for each point of the interval, the stability parameter is less than or equal to a predetermined threshold for a duration greater than or equal to a predetermined duration,
   - estimating, for a particular variable of the plurality of variables, a part of the sequence of successive measurements of the particular variable, so as to obtain a sequence of successive estimates of the particular variable, a start time of the sequence of successive measurements corresponding to an instant in the time interval, the estimate being carried out by an estimator (7) of the estimation device,
   - comparing the sequence of successive estimates with the part of the sequence of successive measurements so as to determine a value of an adjustment parameter, the adjustment parameter being configured to be used by the estimator in order to improve the estimate, and
   - estimating of the future value of the physical quantity of the system (1) by the estimator (7), based on the value of the adjustment parameter.

2. The method according to claim 1, further comprising a step of recording, over time, successive measures of the variables, so as to obtain the sequences of successive measures for each variable of the plurality of variables of the system.

3. The method according to either of claims 1 or 2, wherein, the industrial system being a nuclear reactor, the plurality of physical variables comprises:

   - a power of the reactor,
   - an average temperature of a reactor vessel,
   - an axial power imbalance,
   - a concentration of a chemical species in a heat-transfer fluid circulating in the reactor, the chemical species being configured to absorb neutrons in the reactor, and
   - a position of a device configured to absorb neutrons in the reactor,

   the particular variable being the axial power imbalance.

4. The method according to claim 3, wherein estimating the future value of the physical quantity of the system takes into account a control scenario of the reactor corresponding to a sequence of successive values of at least one variable controllable by an operator.

5. The method according to claim 4, comprising a step of estimating future values of variables of the plurality of variables of the system, and a step of determining a future value of the stability parameter based on future values of the variables of the plurality of variables of the system.

6. The method according to any one of claims 4 and 5 further comprising a step of determining a score of the control scenario, the score being a value of a quantity chosen from among a volume of effluent produced, an average deviation from the reference axial imbalance and an average distance to the limits of an operating range of the reactor.

7. The method according to any one of claims 4 to 6, wherein the control scenario is a first control scenario, the estimation of the future value of the physical quantity of the system being carried out a second time by replacing the first scenario by a second control scenario of the reactor corresponding to another sequence of successive values of at least one controllable variable, the method preferably comprising a step of comparing scores of the first scenario and second scenario.

8. A computer program comprising instructions suitable for implementing at least one of the steps of the method according to any one of the preceding claims 1 to 7 when said program is executed on a computer.

9. A device (20) for estimating a future value of a physical quantity of an industrial system (1), the device (20) being configured to implement the method according to one of claims 1 to 7, the device comprising a processing unit (6) configured:

   - for each variable of the plurality of variables of the system, to obtain the time series of measures of variables of the system (1), a sequence of successive measures of the variable, each variable being associated with a normalised variable defined as the ratio of the variable to a reference value, and to normalise the sequence of successive measures so as to obtain a sequence of successive measures of the normalised variable,

- to determine the stability parameter of the system so as to obtain a sequence of successive values of the stability parameter, the stability parameter being a sum weighted by predetermined coefficients of the rate of variation of the normalised variables,

- to identify the most recent stability time interval in which, for each point of the interval, the stability parameter is less than or equal to a predetermined threshold for a duration greater than or equal to a predetermined duration,

the device further comprising the estimator (7), configured to estimate, for a particular variable of the plurality of variables, a part of the sequence of successive measurements of the particular variable, so as to obtain a sequence of successive estimates of the particular variable, a start time of the sequence of successive measurements corresponding to an instant in the time interval, the processing unit being configured to compare the sequence of successive estimates with the part of the sequence of successive measures, so as to determine a value of an adjustment parameter, the adjustment parameter being configured to be used by the estimator (7) in order to improve the estimate,

the estimator (7) being configured to estimate the future value of the physical quantity based on the value of the adjustment parameter.

**Figure 1**

**Figure 2**

**Figure 3**

**Figure 4**

Figure 5

Figure 6

**Figure 7**

**Figure 8**

**Figure 9**

**Figure 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007179919 A1, KROPACZEK DAVID J

**Littérature non-brevet citée dans la description**

- **SERGE MARGUET**. La physique des réacteurs nucléaires. Lavoisier
- **SERGE MARGUET**. The physics of nuclear reactors. Springer
- **JEAN BUSSAC** ; **PAUL REUSS**. Traité de Neutronique. HERMANN, 1985